# EUROPÄISCHE PATENTANMELDUNG

(11) **EP 4 787 200 A1**
(43) Veröffentlichungstag der Anmeldung: **05.08.2026**
(21) Anmeldenummer: 25155133.9
(22) Anmeldetag: 31.01.2025
(51) Int. Cl.: G06F 18/211, G06F 18/22, G06F 18/28, G06V 20/52

(54) **BESTIMMEN DER BIODIVERSITÄT**

(71) Anmelder: Bayer Aktiengesellschaft, 51373 Leverkusen (DE)
(72) Erfinder: TEMPEL, Matthias, 50935 Köln (DE); BORN, Fabian Christian, 57319 Bad Berleburg (DE)
(74) Vertreter: BIP Patents

(57) **Zusammenfassung**

Die hier offengelegten Verfahren, Vorrichtungen und Systeme beziehen sich auf die Bestimmung der Biodiversität in einem Gebiet.

## Beschreibung

### TECHNISCHES GEBIET

Die hier offengelegten Verfahren, Vorrichtungen und Systeme beziehen sich auf die Bestimmung der Biodiversität in einem Gebiet.

### HINTERGRUND

Biodiversität, kurz für biologische Diversität, bezieht sich auf die Vielfalt des Lebens auf der Welt oder in einem bestimmten Lebensraum oder Ökosystem. Sie umfasst die Vielfalt lebender Organismen, einschließlich Pflanzen, Tiere, Bakterien, Pilze.

Biodiversität ist von entscheidender Bedeutung, da sie zu Ökosystemleistungen beiträgt, die das Leben auf der Erde unterstützen, darunter die Reinigung von Luft und Wasser, die Klimaregulierung, die Bestäubung von Pflanzen, die Bodenfruchtbarkeit und der Nährstoffkreislauf. Sie ist unter anderem für das menschliche Wohlergehen von entscheidender Bedeutung, da sie Ressourcen für Lebensmittel, Fasern, Medikamente sowie Kultur- und Freizeitaktivitäten bereitstellt.

Auch die Vielfalt von Gliederfüßern in einer Region ist für verschiedene Aspekte von Bedeutung. Gliederfüßer sind eine vielfältige Gruppe wirbelloser Tiere, die den Stamm der Arthropoda bilden. Gliederfüßer spielen als Bestäuber, Zersetzer und als Teil des Nahrungsnetzes eine wesentliche Rolle in Ökosystemen.

Eine große Vielfalt an Gliederfüßerarten in einem Gebiet spielt eine entscheidende Rolle bei der Unterstützung und Verbesserung der landwirtschaftlichen Produktivität und Nachhaltigkeit. Gliederfüßer, darunter Insekten, Spinnen und Krebstiere, sind integrale Bestandteile der meisten terrestrischen Ökosysteme, einschließlich Agrarlandschaften. Ihre Bedeutung für die Landwirtschaft lässt sich auf mehrere Faktoren zurückführen.

Viele Gliederfüßer, insbesondere Bienen und Schmetterlinge, sind wichtige Bestäuber für eine Vielzahl von Nutzpflanzen. Die Bestäubung ist für die Produktion von Obst, Gemüse und Saatgut unerlässlich. Ohne diese Bestäuber würden viele Nutzpflanzen geringere Erträge erzielen oder gar nicht erst Früchte tragen.

Eine vielfältige Gliederfüßergemeinschaft umfasst zahlreiche räuberische und parasitäre Arten, die auf natürliche Weise die Populationen von Schadinsekten kontrollieren können. Zum Beispiel machen Marienkäfer, Florfliegen und parasitäre Wespen Jagd auf Blattläuse, Raupen und andere Schädlinge, die Nutzpflanzen schädigen können. Diese biologische Bekämpfung reduziert den Bedarf an chemischen Pestiziden, die schädlich für die Umwelt und die menschliche Gesundheit sein können.

Einige Gliederfüßer, wie bestimmte Käfer und Ameisen, tragen zur Bodengesundheit bei, indem sie organische Stoffe abbauen, den Boden belüften und den Nährstoffkreislauf fördern. Gesunde Böden sind für eine produktive Landwirtschaft von grundlegender Bedeutung, da sie das Pflanzenwachstum und die Wasserregulierung unterstützen.

Eine vielfältige Gliederfüßergemeinschaft trägt zur allgemeinen Biodiversität und zur Widerstandsfähigkeit des Ökosystems bei. Eine hohe Biodiversität kann landwirtschaftliche Systeme widerstandsfähiger gegen Störungen wie Krankheiten, Schädlinge und den Klimawandel machen, indem sie eine Reihe von Reaktionen auf diese Herausforderungen bietet.

Eine vielfältige Gliederfüßerpopulation unterstützt nachhaltige landwirtschaftliche Praktiken, indem sie die Abhängigkeit von chemischen Betriebsmitteln verringert, die natürlichen Ökosystemleistungen verbessert und zum Gleichgewicht zwischen Schädlings- und Raubtierpopulationen beiträgt.

Durch die Bereitstellung wichtiger Ökosystemleistungen wie Bestäubung und Schädlingsbekämpfung können Gliederfüßer die Ernteerträge und -qualität erheblich steigern, was zu wirtschaftlichen Vorteilen für Landwirte und den Agrarsektor führt.

### ZUSAMMENFASSUNG

Ein Gegenstand der vorliegenden Offenbarung ist ein Verfahren umfassend:
- Positionieren mindestens einer Detektionseinheit für Gliederfüßer in einem Gebiet;
- Detektieren einer Vielzahl an Gliederfüßern in einer Zeitspanne;
- Ermitteln eines Biodiversitätswerts auf Basis der detektierten Gliederfüßer;
- Ausgeben und/oder Speichern des Biodiversitätswerts und/oder Übermitteln des Biodiversitätswerts an ein separates Computersystem und/oder Ermitteln einer Maßnahme auf Basis des Biodiversitätswerts.

Ein weiterer Gegenstand der vorliegenden Offenbarung ist eine Vorrichtung umfassend
- eine Detektionseinheit zum Detektieren von Gliederfüßern, wobei die Detektionseinheit eine Vielzahl an Signalen erzeugt, wobei jedes Signal einen oder mehrere Gliederfüßer repräsentiert;
- ein Computersystem zum Verarbeiten der Signale, wobei das Computersystem konfiguriert ist, auf Basis der Signale einen Biodiversitätswert zu ermitteln und den Biodiversitätswert auszugeben, zu speichern und/oder an ein separates Computersystem zu übermitteln.

Ein weiterer Gegenstand der vorliegenden Offenbarung ist ein System umfassend
- mindestens eine Detektionseinheit zum Detektieren von Gliederfüßern, wobei die mindestens eine Detektionseinheit eine Vielzahl an Signalen erzeugt, wobei jedes Signal einen oder mehrere Gliederfüßer repräsentiert;
- ein Computersystem zum Verarbeiten der Signale, wobei das Computersystem konfiguriert ist, auf Basis der Signale einen Biodiversitätswert zu ermitteln und diesen auszugeben, zu speichern und/oder an ein separates Computersystem zu übermitteln.

Ein weiterer Gegenstand der vorliegenden Offenbarung ist ein computerimplementiertes Verfahren umfassend:
- Bereitstellen eines trainierten Modells des maschinellen Lernens;
- Empfangen einer Vielzahl von Signalen eines Gebietes über einen bestimmten Zeitraum, wobei jedes Signal einen Gliederfüßer in dem Gebiet repräsentiert;
- für jedes Signal der Vielzahl von Signalen:
   ∘ Eingeben des Signals in das trainierte Modell des maschinellen Lernens;
   ∘ Empfangen eines Merkmalvektors von dem trainierten Modell des maschinellen Lernens;
- Ermitteln eines Biodiversitätswerts auf Basis der Merkmalvektoren;
- Ausgeben und/oder Speichern des Biodiversitätswerts und/oder Übermitteln des Biodiversitätswerts an ein separates Computersystem und/oder Ermitteln einer Maßnahme auf Basis des Biodiversitätswerts.

Ein weiterer Gegenstand der vorliegenden Offenbarung ist ein computerimplementiertes Verfahren umfassend:
- Bereitstellen eines trainierten Modells des maschinellen Lernens;
- Bereitstellen einer Vielzahl von Signalen eines Gebietes, wobei jedes Signal einen Gliederfüßer in dem Gebiet repräsentiert;
- für jedes Signal der Vielzahl von Signalen:
   ∘ Eingeben des Signals in das trainierte Modell des maschinellen Lernens;
   ∘ Empfangen eines Merkmalvektors von dem trainierten Modell des maschinellen Lernens;
- Ermitteln eines Biodiversitätswerts auf Basis der Merkmalvektoren;
- Ausgeben und/oder Speichern des Biodiversitätswerts und/oder Übermitteln des Biodiversitätswerts an ein separates Computersystem und/oder Ermitteln einer Maßnahme auf Basis des Biodiversitätswerts.

Ein weiterer Gegenstand der vorliegenden Offenbarung ist ein nicht-flüchtiges computerlesbares Speichermedium, auf dem ein Computerprogramm gespeichert ist, das, wenn es von einem Computersystem ausgeführt wird, das Computersystem veranlasst, folgende Schritte auszuführen:
- Bereitstellen eines trainierten Modells des maschinellen Lernens;
- Bereitstellen einer Vielzahl von Signalen eines Gebietes, wobei jedes Signal einen Gliederfüßer in dem Gebiet repräsentiert;
- für jedes Signal der Vielzahl von Signalen:
   ∘ Eingeben des Signals in das trainierte Modell des maschinellen Lernens;
   ∘ Empfangen eines Merkmalvektors von dem trainierten Modell des maschinellen Lernens;
- Ermitteln eines Biodiversitätswerts auf Basis der Merkmalvektoren;
- Ausgeben und/oder Speichern des Biodiversitätswerts und/oder Übermitteln des Biodiversitätswerts an ein separates Computersystem und/oder Ermitteln einer Maßnahme auf Basis des Biodiversitätswerts.

Ein weiterer Gegenstand der vorliegenden Offenbarung ist ein Computersystem, das konfiguriert ist,
- ein trainiertes Modell des maschinellen Lernens bereitzustellen;
- eine Vielzahl von Signalen eines Gebietes bereitzustellen, wobei jedes Signal einen Gliederfüßer in dem Gebiet repräsentiert;
- jedes Signal der Vielzahl von Signalen in das trainierte Modell des maschinellen Lernens einzugeben:
- für jedes in das Modell des maschinellen Lernens eingegebene Signal einen Merkmalvektor von dem trainierten Modell des maschinellen Lernens zu empfangen;
- einen Biodiversitätswert auf Basis aller Merkmalvektoren zu ermitteln;
- den Biodiversitätswert auszugeben und/oder zu speichern und/oder an ein separates Computersystem zu übermitteln und/oder eine Maßnahme auf Basis des Biodiversitätswerts zu ermitteln.

### DETAILLIERTE BESCHREIBUNG

Im Folgenden werden verschiedene Ausführungsbeispiele näher erläutert, ohne zwischen den Gegenständen der Offenbarung zu unterscheiden. Im Gegenteil, die folgenden Erläuterungen sollen analog für alle Aspekte der Offenbarung gelten, unabhängig davon, in welchem Kontext sie auftreten.

Wenn in der vorliegenden Beschreibung oder in den Ansprüchen Schritte in einer bestimmten Reihenfolge angegeben sind, bedeutet dies nicht unbedingt, dass die Offenbarung auf die angegebene Reihenfolge beschränkt ist. Vielmehr ist es denkbar, dass die Schritte auch in einer anderen Reihenfolge oder parallel zueinander ausgeführt werden können, es sei denn, ein Schritt baut auf einem anderen auf, was voraussetzt, dass der aufbauende Schritt anschließend ausgeführt wird (was jedoch im Einzelfall klar ist). Die angegebenen Reihenfolgen sind daher beispielhafte Ausführungsformen der vorliegenden Offenbarung.

Wie hierin verwendet, sollen die Artikel "ein" und "eine" einen oder mehrere Gegenstände umfassen und werden austauschbar mit "ein oder mehrere" und "mindestens ein" verwendet. Wie in der Beschreibung und den Ansprüchen verwendet, umfasst die Singularform von "ein", "eine", "der", "die" und "das" die Pluralform (d.h. mehrere Bezugsgrößen), es sei denn, aus dem Kontext geht eindeutig etwas anderes hervor. Wenn nur ein Gegenstand gemeint ist, werden die Begriff "nur ein", "ausschließlich ein", "lediglich ein" oder ähnliche Formulierungen verwendet. Außerdem sind die Begriffe "hat", "haben", "haben" oder ähnliche Begriffe in der hier verwendeten Form als offene Begriffe zu verstehen. Darüber hinaus soll der Ausdruck "basierend auf" "zumindest teilweise basierend auf" bedeuten, sofern nicht ausdrücklich anders angegeben.

Einige Ausführungsformen der vorliegenden Offenbarung werden unter Bezugnahme auf die beigefügten Zeichnungen ausführlicher beschrieben, in denen einige, aber nicht alle Ausführungsformen der Offenbarung dargestellt sind. Tatsächlich können verschiedene Ausführungsformen der Offenbarung in vielen verschiedenen Formen verkörpert sein und sollten nicht als auf die hierin dargelegten Ausführungsformen beschränkt ausgelegt werden; vielmehr werden diese Beispielimplementierungen dargestellt, um die Offenbarung anhand von konkreten Beispielen nachvollziehen zu können.

Die in dieser Offenbarung verwendeten Begriffe haben die Bedeutung, die diese Begriffe im Stand der Technik haben, insbesondere in dem in dieser Offenbarung zitierten Stand der Technik, sofern nicht anders angegeben.

Die vorliegende Offenbarung befasst sich mit der Ermittlung der Biodiversität in einem Gebiet.

Der Begriff Biodiversität, wie er in dieser Offenbarung verwendet wird, kann sich auf die Vielfalt lebender Organismen in dem Gebiet beziehen.

Im Fall der vorliegenden Offenbarung wird die Vielfalt von Gliederfüßern ermittelt. Sie kann als ein Maß für die Biodiversität in dem Gebiet dienen. Je größer die Vielfalt von Gliederfüßern in einem Gebiet ist, desto größer ist üblicherweise auch die Vielfalt von anderen Organismen und umgekehrt.

Ebenso ist es denkbar, dass ein Nutzer konkret an der Vielfalt von Gliederfüßern in einem Gebiet interessiert ist; d.h., der Begriff Biodiversität kann sich auch konkret auf Gliederfüßer oder spezifische Gliederfüßer beziehen. Mit anderen Worten: unter dem Begriff Biodiversität kann die Vielfalt an Gliederfüßern in dem Gebiet verstanden werden.

Gliederfüßer sind eine vielfältige Gruppe wirbelloser Tiere, die den Stamm der Arthropoda bilden. Gliederfüßer werden in mehrere Hauptgruppen (Unterstämme und Klassen) eingeteilt, darunter Insekten und Spinnentiere.

In einer Ausführungsform der vorliegenden Offenbarung bezieht sich der Begriff Gliederfüßer ausschließlich auf Insekten und Spinnentiere.

In einer anderen Ausführungsform der vorliegenden Offenbarung bezieht sich der Begriff Gliederfüßer ausschließlich auf Insekten.

In einer weiteren Ausführungsform der vorliegenden Offenbarung bezieht sich der Begriff Gliederfüßer ausschließlich auf erwachsene Insekten.

In einer weiteren Ausführungsform der vorliegenden Offenbarung bezieht sich der Begriff Gliederfüßer ausschließlich auf Insekten in Form von Raupen.

In einer weiteren Ausführungsform der vorliegenden Offenbarung bezieht sich der Begriff Gliederfüßer ausschließlich auf fliegende Insekten. Fliegende Insekten sind solche, die fliegen können, und nicht notwendigerweise Insekten, die zum Zeitpunkt ihrer Detektion fliegen.

In einer anderen Ausführungsform der vorliegenden Offenbarung bezieht sich der Begriff Gliederfüßer ausschließlich auf Spinnentiere.

In einer anderen Ausführungsform der vorliegenden Offenbarung bezieht sich der Begriff Gliederfüßer ausschließlich auf Milben.

Die Ermittlung der Biodiversität erfolgt für ein Gebiet. Das Gebiet befindet sich normalerweise im Freien, kann aber auch in einem Folientunnel (Foliengewächshaus) oder einem Gewächshaus sein.

Das Gebiet kann ein Feld für den Anbau von Kulturpflanzen sein oder ein solches umfassen. Das Gebiet kann mehrere Felder für den Anbau von Kulturpflanzen sein oder umfassen. Das Gebiet kann an ein oder mehrere Felder für den Anbau von Kulturpflanzen angrenzen. Das Gebiet kann ein Bereich innerhalb eines Feldes für den Anbau von Kulturpflanzen sein.

Unter dem Begriff "Kulturpflanze" wird eine Pflanze verstanden, die durch menschliches Eingreifen gezielt als Nutzpflanze angebaut wird. Der Begriff "Kulturpflanze" bezieht sich auf jede Pflanze, die von Menschen absichtlich für Lebensmittel, Futtermittel, Fasern, Holz, Duftstoffe, medizinische, hygienische und/oder andere wirtschaftliche Zwecke angebaut und kultiviert wird. Diese Pflanzen werden in der Regel speziell ausgewählt und bewirtschaftet, um einen Ertrag oder eine Ernte zu erzielen, und können eine Vielzahl von Arten umfassen, wie z.B. Getreide, Obst, Gemüse, Ölsaaten und Faserpflanzen. Teile der angebauten Nutzpflanze können für den menschlichen und/oder tierischen Verzehr geeignet sein. Auch Zierpflanzen und Algen fallen unter den Begriff "Kulturpflanze".

Der Begriff "Kulturpflanze" umfasst auch Deckfrüchte. Eine "Deckfrucht" ist eine Pflanze, die hauptsächlich zur Steuerung von Bodenerosion, Fruchtbarkeit, Qualität, Wasser, Unkraut, Schädlingen, Krankheiten, Biodiversität und/oder Wildtieren gepflanzt wird. Deckfrüchte werden in der Regel nicht für die direkte Ernte angebaut, sondern dienen dem Boden und/oder den nachfolgenden Kulturen. Sie werden in der Regel in der Nebensaison und/oder zwischen den regelmäßigen Pflanzungen von Kulturpflanzen gepflanzt. Deckfrüchte können dazu beitragen, Bodenerosion zu verhindern, die Bodengesundheit zu verbessern, den Anteil organischer Stoffe zu erhöhen, Unkraut zu unterdrücken und/oder den Bedarf an synthetischen Düngemitteln und/oder Pestiziden zu verringern. Darüber hinaus können sie die Biodiversität fördern, nützlichen Insekten Lebensraum bieten und/oder zu insgesamt nachhaltigen landwirtschaftlichen Praktiken beitragen. Zu den gängigen Deckfrüchten gehören Hülsenfrüchte wie Klee und Wicke, Gräser wie Roggen und Hafer sowie verschiedene andere Arten, je nach den spezifischen landwirtschaftlichen Zielen und/oder den örtlichen Bedingungen.

Das Gebiet kann eine Plantage sein oder umfassen oder daran angrenzen. Das Gebiet kann auch ein Wald oder ein Park sein oder umfassen oder daran angrenzen.

Das Gebiet kann ein Blühstreifen sein oder umfassen oder daran angrenzen. Ein Blühstreifen ist ein gezielt angelegter Streifen auf landwirtschaftlichen Flächen, der üblicherweise mit einer speziellen Mischung aus einheimischen Wildblumen, Kräutern und/oder teilweise auch Getreidearten bepflanzt wird. Diese Streifen bieten zahlreiche Vorteile sowohl für die Umwelt als auch für die Landwirtschaft. Blühstreifen bieten Lebensraum, Nahrung und/oder Nistplätze für eine Vielzahl von Tieren, insbesondere für Insekten wie Bienen, Hummeln und Schmetterlinge, aber auch für Vögel und kleine Säugetiere. Durch die Zunahme der Artenvielfalt wird das ökologische Gleichgewicht gestärkt. Die in den Blühstreifen lebenden Insekten können wichtige Bestäuber für umliegende landwirtschaftliche Kulturen sowie für Wildpflanzen sein. Eine erhöhte Anzahl von Bestäubern kann zu einer verbesserten Erntequalität und -quantität führen. Blühstreifen können die Ansiedlung von Nützlingen fördern, wie zum Beispiel bestimmte Insektenarten, die Schädlinge natürlich regulieren. Dies kann den Bedarf an chemischen Pflanzenschutzmitteln reduzieren und kann damit zu einem gesünderen Ökosystem beitragen. Die Pflanzen in den Blühstreifen können helfen, den Boden zu stabilisieren und/oder vor Erosion zu schützen. Die Pflanzen in den Blühstreifen können zur Verbesserung der Bodenstruktur und -fruchtbarkeit beitragen, indem sie als Gründüngung dienen und organische Materie in den Boden einbringen.

In einer Ausführungsform der vorliegenden Offenbarung befindet sich das Gebiet in einem oder in der Nähe eines Feldes für den Anbau von Kulturpflanzen. "In der Nähe" kann bedeuten, dass das Gebiet in einer Entfernung von einer Feldgrenze liegt, die nicht größer ist als beispielsweise 1 Meter oder 5 Meter oder 10 Meter oder 20 Meter oder 50 Meter oder 100 Meter oder 500 Meter.

In einer weiteren Ausführungsform der vorliegenden Offenbarung befindet sich das Gebiet in einem Gewächshaus.

In einer weiteren Ausführungsform der vorliegenden Offenbarung befindet sich das Gebiet in einem Folientunnel.

In einer weiteren Ausführungsform der vorliegenden Offenbarung handelt es sich bei dem Gebiet um eine städtische Region.

In einer weiteren Ausführungsform der vorliegenden Offenbarung handelt es sich bei dem Gebiet um ein nicht städtisches Gebiet, wie z.B. ein Naturschutzgebiet, einen Park, einen Wald und/oder ein anderes Biom.

Die Ermittlung der Biodiversität in dem Gebiet erfolgt mit Hilfe einer Detektionseinheit.

Eine "Detektionseinheit" ist eine Vorrichtung, mit der die Anwesenheit von Gliederfüßern in dem Gebiet festgestellt werden kann. Die Detektionseinheit ist konfiguriert, die Anwesenheit von verschiedenen Gliederfüßern in dem Gebiet festzustellen.

Die Detektionseinheit kann konfiguriert sein, verschiedene Gliederfüßer zu unterscheiden.

Die Detektionseinheit kann konfiguriert sein, Gliederfüßer zu identifizieren, d.h. für verschiedene Gliederfüßer festzustellen, um welche Gliederfüßer es sich handelt.

Es wurde gefunden, dass es nicht nötig ist, Gliederfüßer zu identifizieren, um die Biodiversität in einem Gebiet zu ermitteln. In einer Ausführungsform der vorliegenden Offenbarung sind die Detektionseinheit und die Vorrichtung und das System der vorliegenden Offenbarung daher nicht konfiguriert, Gliederfüßer zu identifizieren. In einer Ausführungsform der vorliegenden Offenbarung erfolgt die Ermittlung der Biodiversität in dem Gebiet, ohne dass ein Gliederfüßer (oder eine andere Spezies) identifiziert wird. Unter Identifizieren wird die Beantwortung der Frage verstanden, um welchen Gliederfüßer (z.B. welche Art) es sich im Einzelfall handelt.

Die Detektion von Gliederfüßern kann prinzipiell auf verschiedene Weisen erfolgen, z.B. akustisch, optisch, chemisch und/oder durch genetische Analyse.

In einer Ausführungsform der vorliegenden Offenbarung erfolgt die Erkennung von Gliederfüßern auf akustischem Weg.

Manche Gliederfüßer erzeugen charakteristische Geräusche, die mit einem Mikrofon erfasst werden können. Gliederfüßer können auf verschiedene Weise Geräusche erzeugen, z.B. durch Stridulation (Reiben von Körperteilen aneinander), Tymbalation (Vibrieren einer Membran) und/oder durch die Bewegung ihrer Flügel während des Fluges. Geräusche, die von Gliederfüßern erzeugt werden, können verschiedenen Zwecken dienen, z.B. der Kommunikation, als Paarungsrufe und/oder als Abwehrmechanismus. Geräusche, die von Gliederfüßern erzeugt werden, können zur akustischen Erkennung von Gliederfüßern verwendet werden.

Zur akustischen Erkennung kann die Detektionseinheit ein oder mehrere Mikrofone umfassen. Dabei kann es sich um Mikrofone für Luftschall und/oder Vibrationssensoren (z.B. piezoelektrische Sensoren) für substratübertragene Vibrationen handeln. Mikrofone sind üblicherweise auf den Frequenzbereich der erwarteten akustischen Signale abgestimmt; spezielle Geräte wie Ultraschallmikrofone können beispielsweise verwendet werden, um Geräusche außerhalb des menschlichen Hörbereichs zu erfassen, da viele Gliederfüßer mit Ultraschallfrequenzen kommunizieren.

Nach der Aufnahme mit Hilfe eines oder mehrerer Mikrofone können die aufgenommenen Geräusche verstärkt und/oder gefiltert werden, um Geräusche von Gliederfüßern von Hintergrundgeräuschen zu isolieren. Filter können so eingestellt werden, dass sie sich auf bestimmte Frequenzen und/oder Frequenzbereiche konzentrieren, von denen bekannt ist, dass sie von Gliederfüßern verwendet werden und/oder stammen.

Die optional gefilterten und/oder verstärkten Signale können analysiert werden, um charakteristische Merkmale zu extrahieren. Dies kann die Identifizierung spezifischer Frequenzen, Muster und/oder Sequenzen umfassen, die für bestimmte Gliederfüßer charakteristisch sind.

In einer Ausführungsform der vorliegenden Offenbarung erfolgt die Erkennung von Gliederfüßern auf optischem Weg.

Die Detektion von Gliederfüßern kann auf Basis von Signalen erfolgen, die Gliederfüßer selbst erzeugen und/oder auf Basis von Signalen, die sich durch Wechselwirkung von Gliederfüßern mit elektromagnetischer Strahlung ergeben.

Bei der optischen Erkennung können verschiedene Wechselwirkungen von elektromagnetischer Strahlung mit Gliederfüßern genutzt werden, wie z.B. Reflexion, Brechung und/oder Fluoreszenz, um die Anwesenheit und charakteristische Merkmale von Gliederfüßern zu erkennen.

Gliederfüßer haben üblicherweise ein charakteristisches Erscheinungsbild, das eine Unterscheidung verschiedener Gliederfüßer und/oder eine Identifikation bestimmter Gliederfüßer erlaubt. Dieses Erscheinungsbild kann mittels einer optischen Kamera erfasst und festgehalten werden. Die Detektionseinheit kann also eine oder mehrere optische Kameras umfassen.

Eine "Kamera" ist eine Vorrichtung oder ein System, das dazu bestimmt ist, Bildaufnahmen von Objekten und/oder Phänomenen zu erfassen und aufzuzeichnen. Eine Kamera nutzt dazu beispielsweise elektromagnetische Strahlung, Schallwellen und/oder andere physikalische Vorgänge, die visuell dargestellt werden können. Die Kamera wandelt empfangene Signale (z.B. optische und/oder akustische) in andere Signale (z.B. elektrische) und/oder Daten um, die gespeichert, verarbeitet, angezeigt und/oder übertragen werden können. Der Begriff "Kamera" umfasst Geräte, die mit allen Medien oder Technologien arbeiten, einschließlich analoger und digitaler, optischer, elektronischer, chemischer und/oder anderer Methoden der Bilderfassung. Der Begriff "Kamera" umfasst ein breites Spektrum von Geräten einschließlich, aber nicht beschränkt auf Fotokameras, Videokameras, Wärmebildkameras, Radarsysteme, Ultraschall-Bildgebungsgeräte, Elektronenmikroskope und alle künftigen Technologien, die die Funktion der Bilderfassung erfüllen können.

In einer Ausführungsform der vorliegenden Offenbarung ist die Kamera eine Digitalkamera, die mit Hilfe eines oder mehrerer Bildsensoren zweidimensionale Abbilder aus Licht auf elektrischem Weg erzeugt (optische Kamera). Üblicherweise handelt es sich um halbleiterbasierte Bildsensoren wie beispielsweise CCD- (CCD *= charge-coupled device*) oder CMOS-Sensoren (CMOS *= complementary metal-oxide-semiconductor*)*.* Optische Elemente wie Linsen, Blenden und dergleichen dienen einer möglichst scharfen Abbildung von Gliederfüßern auf dem Bildsensor. Eine Digitalkamera ist konfiguriert, digitale Bilder zu erzeugen.

Digitale Bilder können mit Computersystemen und Computerprogrammen verarbeitet, bearbeitet und reproduziert sowie in standardisierte Datenformate konvertiert werden, wie zum Beispiel JPEG (Grafikformat der Joint Photographic Experts Group), PNG (Portable Network Graphics) oder SVG

(Scalable Vector Graphics). Digitale Bilder können mit geeigneten Anzeigegeräten visualisiert werden, wie zum Beispiel mit Computermonitoren, Projektoren und/oder Druckern.

Mittels einer oder mehreren optischen Kameras können Aufnahmen von einem Bereich in dem Gebiet, in dem Gliederfüßer vermutet werden, erzeugt werden. Dies kann mit Standard-Digitalkameras, speziellen Makroobjektiven für Nahaufnahmen und/oder Infrarot- und/oder Ultraviolettkameras erfolgen, die Details sichtbar machen können, die für das menschliche Auge nicht erkennbar sind. Bei fliegenden Gliederfüßern können Hochgeschwindigkeitskameras eingesetzt werden, um Bewegungen einzufrieren und klare Bilder aufzunehmen.

Die optische Erkennung erfordert die Anwesenheit einer Quelle für elektromagnetische Strahlung.

Diese Quelle für elektromagnetische Strahlung kann ein Gliederfüßer selbst sein. Einige Gliederfüßer verfügen über Leuchtorgane, die mittels Biolumineszenz charakteristische Leuchtsignale aussenden können, die oft arttypisch sind und sich in Länge und/oder Rhythmus und/oder Spektralbereich unterscheiden können.

Als elektromagnetische Strahlung kann auch Tageslicht (direktes und/oder reflektiertes und/oder gestreutes Sonnenlicht) und/oder Mond- und Sternenlicht verwendet werden.

Neben den genannten natürlichen Quellen für elektromagnetische Strahlung können auch Quellen für künstliche elektromagnetische Strahlung eingesetzt werden. Verschiedene Beleuchtungstechniken wie z.B. Hintergrundbeleuchtung und/oder die Verwendung bestimmter Wellenlängen und/oder Spektralbereiche der elektromagnetischen Strahlung können die Sichtbarkeit von Gliederfüßern vor ihrem Hintergrund verbessern. Fluoreszierende Beleuchtung kann beispielsweise bestimmte Teile von Gliederfüßern zum Leuchten bringen und so die Erkennung erleichtern.

Jede in dieser Offenbarung aufgeführte künstliche Quelle für elektromagnetische Strahlung kann monochromatisch oder polychromatisch sein. Die Quelle kann elektromagnetische Strahlung einer einzigen Wellenlänge emittieren; die Quelle kann elektromagnetische Strahlung mehrerer (verschiedener) Wellenlängen emittieren. Im Fall von mehreren Wellenlängen können diese zusammengenommen ein Kontinuum oder mehrere Kontinuen bilden; die elektromagnetische Strahlung kann auch eine Mehrzahl von Wellenlängen umfassen, die durch andere Wellenlängen, die nicht in der elektromagnetischen Strahlung vertreten sind, getrennt sind. Mischformen sind ebenfalls möglich.

Optische Sensoren und/oder Scanner können die Umgebung scannen und Veränderungen in den Lichtmustern identifizieren, die durch die Anwesenheit von Gliederfüßern verursacht werden. Diese Sensoren können auf bestimmte Wellenlängen und/oder Lichtmuster eingestellt werden, von denen bekannt ist, dass sie von bestimmten Insektenarten reflektiert und/oder absorbiert werden.

Die von solchen Sensoren und/oder Scannern erfassten Signale können direkt zum Erkennen von Gliederfüßern verwendet werden und/oder die Erzeugung eines Bildes von dem Bereich, in dem ein Gliederfüßer vermutet wird, triggern.

Aufgenommene Bilder können mithilfe von Computeralgorithmen verarbeitet werden, um Gliederfüßer zu erkennen und/oder zu identifizieren und/oder zu zählen. Bildverarbeitungstechniken können den Kontrast verbessern, bestimmte Farbbereiche isolieren und/oder Mustererkennung anwenden, um Gliederfüßer vom Hintergrund zu unterscheiden.

Gliederfüßer können auch mittels LiDAR (*Light Detection and Ranging*) erkannt werden. Die Detektionseinheit kann ein LiDAR-System sein oder ein solches umfassen.

LiDAR-Systeme senden Laser-Impulse aus und messen die Zeit, die die elektromagnetische Strahlung benötigt, um nach dem Auftreffen auf ein oder mehrere Objekte zurückzukehren. Diese Daten können verwendet werden, um detaillierte dreidimensionale Bilder des untersuchten Gebiets zu erstellen.

Bestandteile eines LiDAR-Systems sind ein Laser zum Aussenden von Laser-Impulsen und ein Sensor, der die von Objekten, einschließlich Gliederfüßern, zurückgeworfene elektromagnetische Strahlung erkennt. Scanner und Positionierungssysteme können die Richtung und den Winkel der Laser-Impulse steuern. Sie ermöglichen es dem LiDAR-System, einen bestimmten Bereich oder ein bestimmtes Volumen zu scannen. Nachdem ein Laser-Impuls ausgesendet wurde und von Objekten, einschließlich Gliederfüßern, reflektiert wurde, kehrt er zum LiDAR-System zurück, wo er vom Sensor erfasst wird. LiDAR-Systeme können einzelne fliegende Gliederfüßer erkennen und verfolgen. Durch die Analyse der in den LiDAR-Daten erfassten Flugbahnen und/oder Flügelschlagfrequenzen können verschiedene Gliederfüßer unterschieden werden.

In einer Ausführungsform der vorliegenden Offenbarung erfolgt die Erkennung von Gliederfüßern durch genetische Analyse. Die Detektion von Gliederfüßern kann durch genetische Analyse von Proben aus dem Gebiet erfolgen. Das so genannte DNS/RNS-Metabarcoding kombiniert die Sequenzierung von DNS (Desoxyribonukleinsäre) und/oder RNS (Ribonukleinsäure) mit Bioinformatik, um verschiedene Spezies aus einer einzigen Umweltprobe zu identifizieren. Dieser Ansatz basiert auf der Analyse kurzer, standardisierter DNS- und/oder RNS-Abschnitte, die als "Barcodes" bezeichnet werden und für jede Art oder eine Gruppe eng verwandter Arten einzigartig sind. DNS-Metabarcoding ermöglicht die schnelle und gleichzeitige Identifizierung vieler Arten und kann damit zur gleichzeitigen Erkennung und Unterscheidung mehrerer Gliederfüßer eingesetzt werden.

Ein erster Schritt besteht darin, Proben in dem Gebiet (z.B. an verschiedenen Positionen in dem Gebiet) zu sammeln, aus denen DNS/RNS extrahiert werden kann. Für den Nachweis von Gliederfüßern können diese Proben Boden, Wasser, Luftfilter (für luftgetragene DNS/RNS), Pflanzenmaterial und/oder Sammelproben (Großproben) sein.

Anschließend kann aus den gesammelten Proben DNS und/oder RNS extrahiert werden. Bei diesem Verfahren werden die Zellen in der Probe aufgespalten, um die DNS und/oder RNS freizusetzen, die dann gereinigt und für die weitere Analyse konzentriert werden kann. Die extrahierte DNS/RNS kann einer Polymerase-Kettenreaktion (PCR) unterzogen werden, um die Barcode-Regionen der DNS/RNS selektiv zu vervielfältigen. Mithilfe von Primern - kurzen DNS oder RNS-Sequenzen, die zu den Regionen passen, die den Barcode flankieren - kann sichergestellt werden, dass nur die gewünschten Segmente vervielfältigt werden. Die DNS/RNS-Barcodes können dann mithilfe von Hochdurchsatz-Sequenzierungstechnologien sequenziert werden.

Für die DNS/RNS-Metabarcodierung kann auch die von Oxford Nanopore Technologies entwickelte Nanopore-Sequenzierung kann eingesetzt werden. Die Nanopore-Sequenzierung basiert auf der Erkennung von Veränderungen in der elektrischen Leitfähigkeit, wenn einzelne Moleküle von DNS oder RNS durch eine Nanopore in einer synthetischen Membran gelangen. Diese Technologie ermöglicht eine direkte Echtzeit-Sequenzierung langer DNS- und/oder RNS-Fragmente, ohne dass eine Amplifikation und/oder komplexe Probenvorbereitung erforderlich ist.

In einer Ausführungsform der vorliegenden Offenbarung erfolgt die Erkennung von Gliederfüßern durch chemische Analyse. Auch chemische Analysen können eingesetzt werden, um Gliederfüßer in einem Gebiet zu erkennen. Dabei können Umweltproben auf bestimmte Chemikalien untersucht werden, die auf das Vorhandensein, die Aktivität und/oder den Stoffwechsel von Gliederfüßern hinweisen.

Solche Chemikalien können beispielweise Pheromone sein. Pheromone sind u.a. von Gliederfüßern abgesonderte Chemikalien, die bei anderen Mitgliedern derselben Art bestimmte Verhaltensweisen auslösen; sie dienen z.B. zum Anlocken von Partnern.

Einige Gliederfüßer setzen im Rahmen ihrer Lebensprozesse, wie z.B. Paarung, Nahrungsaufnahme und/oder Verteidigung, spezifische flüchtige organische Verbindungen (VOCs: *volatile organic compounds*) frei. Die Analyse von Luftproben auf diese VOCs kann Hinweise auf das Vorhandensein solcher Gliederfüßer liefern. Zur Identifizierung und Quantifizierung dieser Verbindungen können Analysetechniken wie Gaschromatographie-Massenspektrometrie (GC-MS) eingesetzt werden. Einige Gliederfüßer, wie z.B. Blattläuse, scheiden eine zuckerhaltige Substanz aus, die als Honigtau bekannt ist, wenn sie sich von Pflanzensaft ernähren. Das Vorhandensein von Honigtau z.B. auf Pflanzen kann auf die Anwesenheit von Gliederfüßern in dem Gebiet schließen lassen.

Bodenproben können auf chemische Marker untersucht werden, die auf Gliederfüßeraktivitäten hinweisen. So können bestimmte Gliederfüßer im Boden die chemische Zusammensetzung des Bodens durch ihre Ausscheidungen und/oder durch Beeinflussung des Zersetzungsprozesses verändern.

Gliederfüßer, die sich von Pflanzen ernähren, können als Abwehrmechanismus die Produktion spezifischer Chemikalien durch die Pflanze auslösen. Die Analyse von Pflanzengewebe oder der Umgebung auf diese Chemikalien kann auf das Vorhandensein von Gliederfüßern hinweisen, die sich von Pflanzen ernähren, auch wenn die Gliederfüßer selbst nicht direkt beobachtet werden.

Es können weitere Methoden zum Erkennen von Gliederfüßern in dem Gebiet eingesetzt werden. Es ist möglich, verschiedene Methoden miteinander zu kombinieren.

Es ist denkbar, dass ein oder mehrere Sammelbereiche in Reichweite der Detektionseinheit vorliegen. Im Falle von mehreren Sammelbereichen ist es möglich, dass diese in unterschiedliche Richtungen ausgerichtet sind und/oder für unterschiedliche Gliederfüßer bestimmt sind.

Ein solcher Sammelbereich kann ein Bereich sein, in dem sich Gliederfüßer aufhalten müssen, um von der Detektionseinheit erfasst zu werden. Der Sammelbereich kann beispielsweise das Sichtfeld einer Kamera in einem Fokusabstand zur Kamera sein oder umfassen. Der Sammelbereich kann eine Fläche sein oder umfassen, die eben oder gekrümmt sein kann. Der Sammelbereich kann ein Volumen sein oder umfassen.

Die Größe des Sammelbereichs hängt in der Regel von der Größe der Gliederfüßer ab, die sich in dem Bereich aufhalten. Der Sammelbereich ist in der Regel größer als die Gliederfüßer, beispielsweise mehr als zehnmal, mehr als zwanzigmal oder mehr als hundertmal so groß.

Die Größe des Sammelbereichs hängt in der Regel ferner üblicherweise von der Reichweite der Detektionseinheit und/oder dem verwendeten Sensor ab. Wenn es sich bei der Detektionseinheit beispielsweise um eine optische Kamera handelt, hängt die Größe des Sammelbereichs in der Regel von der Größe des Bildsensors, der Tiefenschärfe, dem Sichtfeld sowie den verwendeten Blenden und Linsen ab.

In einer Ausführungsform der vorliegenden Offenbarung ist der Sammelbereich flach und/oder umfasst eine flache Oberfläche. Die Fläche und/oder die Oberfläche können dreieckig, viereckig (z.B. rechteckig oder quadratisch), fünfeckig, sechseckig oder allgemein n-eckig sein, wobei n eine ganze Zahl größer als zwei ist. Die Fläche und/oder die Oberfläche können auch rund oder elliptisch sein oder eine andere Form haben. In einer Ausführungsform der vorliegenden Offenbarung ist die Fläche und/oder die Oberfläche flach und rechteckig, wobei die Ecken abgerundet sein können, und erstreckt sich senkrecht zur Richtung der Schwerkraft. In einer Ausführungsform der vorliegenden Offenbarung hat die Fläche und/oder Oberfläche eine Ausdehnung im Bereich von 100 mm x 200 mm bis 250 mm x 250 mm. In einer Ausführungsform der vorliegenden Offenbarung hat die Fläche und/oder Oberfläche eine Ausdehnung im Bereich von 100 mm x 200 mm bis 250 mm x 250 mm. In einer Ausführungsform der vorliegenden Offenbarung hat die Fläche und/oder Oberfläche eine Ausdehnung im Bereich von 100 mm x 160 mm bis 130 mm x 190 mm. In einer Ausführungsform der vorliegenden Offenbarung hat die Fläche und/oder Oberfläche eine Ausdehnung im Bereich von 160 mm x 210 mm bis 180 mm x 230 mm.

In einer Ausführungsform ist der Sammelbereich eine ebene Oberfläche einer Tafel oder Karte oder dergleichen. In einer Ausführungsform ist der Sammelbereich ein Boden eines Behälters. In einer Ausführungsform ist der Sammelbereich eine Flüssigkeit in einem Behälter. In einer Ausführungsform ist der Sammelbereich eine Pflanze oder ein Teil einer Pflanze, wie beispielsweise ein Blatt oder eine Frucht oder ein anderer Teil einer Pflanze. In einer Ausführungsform umfasst der Sammelbereich mehrere Pflanzen und/oder mehrere Teile einer oder mehrerer Pflanzen.

Der Sammelbereich kann Teil einer Fangvorrichtung für Gliederfüßer sein, beispielsweise eine mit Flüssigkeit gefüllte Fangschale oder eine Klebefalle oder eine Delta-Falle oder dergleichen.

Der Sammelbereich kann Mittel zum Immobilisieren von Gliederfüßern umfassen. Ein solches Mittel kann beispielsweise eine Flüssigkeit sein. Die Flüssigkeit kann Wasser sein, der ein Mittel zur Erniedrigung der Oberflächenspannung zugesetzt sein kann. Die Flüssigkeit kann ein Herbizid umfassen, um Algenwachstum in der Flüssigkeit zu verhindern oder zu reduzieren.

Ein Mittel zum Immobilisieren von Gliederfüßern kann eine mit einem Klebemittel (z.B. einem Leim) versehene Oberfläche sein.

Ein Mittel zum Immobilisieren von Gliederfüßern kann eine Vorrichtung sein, deren Wandungen einen Innenraum teilweise gegenüber der Außenwelt abschließen, wobei eine oder mehrere Öffnungen vorhanden sind. Durch die mindestens eine Öffnung können Gliederfüßer in den Innenraum gelangen, wo sie detektiert werden können. Die Wandungen und die mindestens eine Öffnung sind üblicherweise so gestaltet, dass Gliederfüßer leichter in den Innenraum gelangen als wieder heraus.

In einer Ausführungsform der vorliegenden Offenbarung werden keine Mittel zum Immobilisieren von Gliederfüßern verwendet, um Gliederfüßer zu detektieren.

In einer weiteren Ausführungsform der vorliegenden Offenbarung werden nur solche Mittel zum Immobilisieren von Gliederfüßern verwendet, die Gliederfüßer für eine begrenzte Zeitspanne und nicht dauerhaft in ihrer Bewegung einschränken.

Werden keine Mittel zum Immobilisieren von Gliederfüßern eingesetzt, um Gliederfüßer zu detektieren, können Maßnahmen ergriffen werden, um die Wahrscheinlichkeit erhöhen, dass sich Gliederfüßer in der Reichweite der Detektionseinheit aufhalten und/oder es können Sensoren verwendet werden, die die Anwesenheit eines Gliederfüßers in der Nähe einer Detektionseinheit erkennen und in einem solchen Fall eine Signalerfassung durch die Detektionseinheit initiieren.

Die Detektionseinheit und/oder der Sammelbereich können Mittel umfassen, um Gliederfüßer anzulocken. Solche Mittel werden in dieser Offenbarung auch als Lockmittel bezeichnet. Solche Lockmittel können verwendet werden, um die Wahrscheinlichkeit, Gliederfüßer mit der Detektionseinheit zu detektieren, zu vergrößern. Lockmittel können die Aufenthaltswahrscheinlichkeit von Gliederfüßern in, an, auf und/oder in der Umgebung der Detektionseinheit und/oder des Sammelbereichs erhöhen. Bei der Verwendung von Lockmitteln sollte beachtet werden, dass Lockmittel dazu führen können, dass spezifische Gliederfüßer angelockt oder vermehrt angelockt werden. Die Verwendung von Lockmitteln kann dazu führen, dass die Wahrscheinlichkeiten, mit denen spezifische Gliederfüßer mittels der Detektionseinheit erfasst werden, anders sind als ohne Lockmittel. In einer Ausführungsform der vorliegenden Offenbarung wird daher kein Lockmittel verwendet. In einer weiteren Ausführungsform der vorliegenden Offenbarung wird ein Lockmittel verwendet, dass eine Mehrzahl verschiedener Gliederfüßer anlockt. In einer weiteren Ausführungsform werden mehrere verschiedene Lockmittel verwendet, die verschiedene Gliederfüßer anlocken. In einer weiteren Ausführungsform wird ein oder werden mehrere Lockmittel verwendet, das/die eine vergleichsweise geringe Reichweite hat/haben. Unter "Reichweite" im Zusammenhang mit einem Lockmittel wird derjenige Abstand vom Lockmittel verstanden, der mindestens vorliegen muss, damit das Lockmittel einen signifikanten Effekt auf einen Gliederfüßer ausübt. Die Reichweite kann beispielsweise einen Meter oder mehrere Meter (z.B. 2, 3, 4, 5, 6, 7, 8, 9, 10 oder mehr als 10 Meter) betragen.

Als Lockmittel können ein Pheromon und/oder ein Duftstoff, der z.B. eine Nahrungsquelle vortäuscht, verwendet werden. Bei der Verwendung von Pheromonen und/oder Duftstoffen sollte beachtet werden, dass solche Lockmittel verwendet werden, die nicht mit der Detektionsmethode interferieren. Erfolgt die Detektion von Gliederfüßern beispielsweise chemisch anhand von Pheromonen und/oder VOCs, so wird von der Verwendung von Pheromonen und/oder Duftstoffen als Lockmittel eher abgeraten.

Als Lockmittel können Geräusche, die beispielsweise paarungswillige Männchen und/oder Weibchen imitieren, eingesetzt werden.

Als Lockmittel kann der Sammelbereich in einer Farbe gestaltet sein (z.B. gelb oder rot oder grün), die spezifische Gliederfüßer anlockt. Es können mehrere verschiedene Farben vorhanden sein. Auch der Einsatz von speziellen Mustern, die zum Beispiel eine Pflanze und/oder eine Nahrungsquelle imitieren, ist denkbar.

Farbe kann auf verschiedene Weise realisiert werden. Der Sammelbereich kann einen Farbstoff umfassen, der bei Bestrahlung mit weißem Licht (z.B. Tageslicht) elektromagnetische Strahlung eines definierten Spektralbereichs reflektiert und/oder streut und/oder beugt. Üblicherweise wird ein Teil der Wellenlängen des weißen Lichts von dem Farbstoff zumindest teilweise absorbiert, so dass die von dem Farbstoff zurückgesandte Strahlung eine andere Wellenlängenverteilung aufweist als die auf den Farbstoff treffende Strahlung.

Es ist auch möglich, dass eine künstliche Quelle für elektromagnetische Strahlung verwendet wird, die den Sammelbereich mit elektromagnetischer Strahlung definierter Wellenlängen oder definierten Wellenlängenbereichen und/oder Intensitäten von Wellenlängen bestrahlt. Es kann z.B. eine lichtemittierende Diode (LED) oder es können mehrere LEDs verwendet werden. Eine solche LED kann auf den Sammelbereich gerichtet sein. Es ist möglich, dass mehrere LEDs verwendet werden. Es ist möglich, dass die mehreren LEDs verschiedene Teilbereich des Sammelbereichs bestrahlen; es ist möglich, dass die mehreren LEDs denselben Teilbereich des Sammelbereichs oder den kompletten Sammelbereich bestrahlen; es ist möglich, dass verschiedene LEDs verschiedene Sammelbereiche bestrahlen.

Es ist auch möglich, dass der Sammelbereich eine Fläche umfasst, die selbst als Quelle für elektromagnetische Strahlung dient. Der Sammelbereich kann zumindest teilweise selbstleuchtend sein, d.h. selbstleuchtende Eigenschaften besitzen.

"Selbstleuchtend" bedeutet, dass der Sammelbereich selbst elektromagnetische Strahlung emittiert. "Emission" bedeutet in diesem Zusammenhang, dass die von dem Sammelbereich ausgesandte Strahlung nicht oder nicht ausschließlich durch Reflexion, Streuung und/oder Beugung elektromagnetischer Strahlung, die auf den Sammelbereich trifft, verursacht wird.

Bei der selbstleuchtenden Eigenschaft kann es sich um Phosphoreszenz handeln. Mit anderen Worten: es kann ein phosphoreszierendes Material verwendet werden, um die selbstleuchtende Eigenschaft zu erzeugen. Beispiele für phosphoreszierende Materialien sind Zinksulfid (ZnS), das optional mit Kupfer dotiert ist, Strontiumaluminat (SrAl₂O₄), das optional mit Europium und/oder Dysprosium dotiert ist, Calciumsulfid (CaS), das optional mit Bismut dotiert ist, Yttrium-Aluminium-Granat (YAG), das optional mit Cer dotiert ist, und/oder Strontium-Magnesium-Silikat (Sr₂MgSi₂O₇), das optional mit Europium dotiert ist. Weitere phosphoreszierende Materialien sind in wissenschaftlichen Artikeln und Patentanmeldungen/Patenten offenbart (siehe z.B. WO2005/044944A1, WO2011/066415A2, WO2003/018653A1, EP0325825A1, WO2010/024301A1).

In einer Ausführungsform der vorliegenden Offenbarung umfasst der Sammelbereich einen Kunststoff oder einen Verbundwerkstoff, der mit einem phosphoreszierenden Material beschichtet ist und/oder in das ein phosphoreszierendes Material eingearbeitet ist (siehe z.B.: WO2016136012A1, WO2020/044027 A1, WO1996/26991A1).

Bei der selbstleuchtenden Eigenschaft kann es sich um Elektrolumineszenz handeln. Bei der Elektrolumineszenz wird ein Material oder Verbundwerkstoff durch Anlegen eines elektrischen Feldes bzw. einer elektrischen Spannung dazu angeregt, elektromagnetische Strahlung zu emittieren. In einer Ausführungsform der vorliegenden Offenbarung umfasst der Sammelbereich ein elektrolumineszierendes Element (siehe z.B. WO2004/048395A1, WO2016/119533A1, US20090104472A1, WO2004/048395A1). Bei dem elektrolumineszenten Material kann es sich um Zinksulfid handeln, das mit Mangan, Gold, Silber, Kupfer und/oder Gallium dotiert sein kann. Eine solche Elektrolumineszenz-Folie kann zum Leuchten gebracht werden, indem eine sinusförmige Wechselspannung angelegt wird. Je nach Bauart liegt die Betriebsspannung üblicherweise zwischen 30 und 300 Volt bei einer Frequenz zwischen 50 Hz und 4 kHz.

Der Sammelbereich kann ferner eine OLED (organische Leuchtdiode) sein oder eine solche umfassen. In einer Ausführungsform der vorliegenden Offenbarung liegt eine solche OLED als ein flexibler Folienverbund vor.

In einer Ausführungsform der vorliegenden Offenbarung ist der Sammelbereich so gestaltet, dass er die Farbe wechseln kann. Vorzugsweise wird die Farbe automatisch geändert, z.B. zu definierten Zeitpunkten und/oder in definierten zeitlichen Abständen und/oder bei Eintreten definierter Ereignisse.

Es können ein oder mehrere Quellen für elektromagnetische Strahlung vorhanden sein, die den Sammelbereich mit wechselnder elektromagnetischer Strahlung bestrahlen und/oder der Sammelbereich kann selbst elektromagnetische Strahlung unterschiedlicher Farbe emittieren. Die jeweils verwendete elektromagnetische Strahlung kann den Sammelbereich in eine definierte Farbe tauchen. Die elektromagnetische Strahlung und damit die Farbe kann periodisch oder aperiodisch geändert werden.

Ferner ist es möglich, dass verschiedene Karten oder Folien vorhanden sind, die jeweils eine unterschiedliche Farbe aufweisen. Solche Karten oder Folien können periodisch oder aperiodisch ausgetauscht werden. Bei solchen Karten oder Folien kann es sich auch um in verschiedenen Farben gestaltete Abschnitte einer Karte oder Folie handeln.

Wie oben bereits beschrieben, kann ein oder können mehrere Sensoren verwendet werden, die eine Signalerfassung durch die Detektionseinheit initiieren, wenn sie die Anwesenheit eines Gliederfüßers in der Reichweite der Detektionseinheit erfassen. Solche Sensoren sind beispielsweise in WO2020/058170A1 beschrieben.

Die Detektionseinheit wird in dem Gebiet positioniert. Es ist möglich, dass mehrere Detektionseinheiten in dem Gebiet positioniert werden.

Die Detektionseinheit kann in dem Gebiet aufgestellt und/der aufgehängt oder anderweitig fixiert werden. Die Detektionseinheit kann ein Stativ umfassen, um die Detektionseinheit in einer definierten Höhe zu positionieren und/oder in definierter Weise gegenüber einem Sammelbereich auszurichten.

In einem weiteren Schritt erfolgt ein Detektieren einer Vielzahl an Gliederfüßern in einer Zeitspanne. Das Detektieren der Vielzahl an Gliederfüßern erfolgt mit Hilfe mindestens einer Detektionseinheit.

Die mindestens eine Detektionseinheit weist eine oder mehrere Sensoren auf, mit denen Gliederfüßer detektiert werden können.

Ein Sensor ist ein technisches Bauelement oder Gerät, das bestimmte physikalische und/oder chemische Eigenschaften und/oder Zustände (wie Temperatur, Feuchtigkeit, Druck, Helligkeit, Gaskonzentrationen usw.) erfassen und messen kann. Diese erfassten Größen werden in der Regel in elektrische Signale umgewandelt, die dann weiterverarbeitet, gespeichert und/oder angezeigt werden können.

Als Sensoren wurden in dieser Offenbarung beispielsweise Kamera, Mikrofon, LiDAR-Sensor, Gaschromatograph, Massenspektrometer und Nanotubes genannt. Weitere Sensoren sind denkbar.

Die Detektion von Gliederfüßern gemäß der vorliegenden Offenbarung erfolgt durch Erfassen von Signalen. Solche Signale werden von einem oder mehreren Sensoren geliefert. Solche Signale können digitalisiert werden. Solche Signale geben Auskunft über die Anwesenheit eines Gliederfüßers (oder mehrerer Gliederfüßer).

Ein solches Signal kann ein Bild sein, das von einer Kamera erzeugt wurde. In dem Bild kann mindestens ein Gliederfüßer abgebildet sein. Ein solches Signal kann ein Audiosignal sein. Das Audiosignal kann ein Geräusch umfassen, das von einem Gliederfüßer stammt. Ein solches Signal kann ein Reflexionssignal eines Laser-Pulses sein. Das Reflexionssignal kann ein Muster umfassen, das auf den Flügelschlag eines Gliederfüßers zurückgeführt werden kann. Ein solches Signal kann ein Chromatogramm und/oder Massenspektrum sein. Das Chromatogramm und/oder Massenspektrum können ein oder mehrere Banden aufweisen, die chemische Zusammensetzungen repräsentieren. Die chemischen Zusammensetzungen können Ausscheidungen von Gliederfüßern oder von Pflanzen in Reaktion auf Gliederfüßer anzeigen. Ein solches Signal kann eine oder mehrere Sequenzen von Nukleotiden sein. Eine solche Sequenz kann einen Teil des Erbguts eines Gliederfüßers repräsentieren. Weitere Arten von Signalen sind möglich.

Zur Vereinfachung werden die Gegenstände der vorliegenden Offenbarung in weiten Teilen der Beschreibung anhand von Bildern als Signale beschrieben. Dies erfolgt jedoch aus Gründen der Verständlichkeit und soll nicht bedeuten, dass die vorliegende Offenbarung auf Bilder als Signale beschränkt ist. Dem Fachmann der Informationstechnologie ist bekannt, wie er die Beschreibung auf andere Signale als Bilder anwenden kann.

Das Detektieren von Gliederfüßern erfolgt üblicherweise dadurch, dass über eine Zeitspanne Signale erfasst werden, die die Anwesenheit von Gliederfüßern anzeigen. Das Detektieren von Gliederfüßern erfolgt üblicherweise dadurch, dass eine Vielzahl an Signalen über die Zeitspanne erfasst wird. Wie beschrieben können solche Signale Bilder sein oder umfassen. Die Zahl der Signale (z.B. Bilder) beträgt üblicherweise mehr als 10, z.B. mehr als 50 oder sogar mehr als 100. Die Zahl der Signale (z.B. Bilder) kann auch mehr als 1000 betragen. Jedes Signal kann Merkmale aufweisen, die einen oder mehrere Gliederfüßer anzeigen. Im Fall eines Bildes kann das Bild einen oder mehrere Gliederfüßer zeigen. Es ist aber auch möglich, dass ein Signal keinen Gliederfüßer anzeigt. Es ist z.B. möglich, dass eine optische Kamera Bilder von einem Sammelbereich erzeugt und sich in dem Sammelbereich kein Gliederfüßer befindet.

Die erfassten Signale können auf das Vorhandensein charakteristischer Merkmale untersucht werden, die einen oder mehrere Gliederfüßer anzeigen. Können in einem Signal keine Merkmale identifiziert werden, die auf die Anwesenheit eines Gliederfüßers schließen lassen, kann das Signal verworfen werden.

Umfasst ein Signal Merkmale von mehreren (z.B. verschiedenen) Gliederfüßern, kann das Signal in Teilsignale aufgeteilt werden, um die Merkmale der mehreren Gliederfüßer voneinander zu separieren. Ein Ziel der Aufteilung kann sein, dass jedes Teilsignal einen einzelnen Gliederfüßer repräsentiert und/oder dass jedes Teilsignal einen oder mehrere Gliederfüßer einer bestimmten Art repräsentiert.

Im Fall eines Bildes, das mehrere Gliederfüßer zeigt, kann das Bild segmentiert und es können Teilbilder erzeugt werden, von denen jedes nur einen Gliederfüßer zeigt.

Die Zeitspanne, in der Signale erfasst und Gliederfüßer detektiert werden, kann weniger als eine Stunde oder eine Stunde oder mehrere Stunden oder einen Tag oder mehrere Tage (z. B. 2, 3, 4, 5 oder 6 oder mehr als 6) oder eine Woche oder mehrere Wochen (z. B. 2, 3, 4, 5 oder 6 oder mehr als 6) oder mehr betragen.

Es ist möglich, dass die Detektionseinheit konfiguriert ist, kontinuierlich oder zu definierten Zeitpunkten oder in definierten Zeitabständen Signale zu erfassen. Die Detektionseinheit oder ein mit der Detektionseinheit verbundenes Computersystem kann konfiguriert sein, die erfassten Signale auf charakteristische Merkmale eines Gliederfüßers zu analysieren. Umfasst ein erfasstes Signal kein solches Merkmal, kann das Signal verworfen werden. Umfasst ein Signal ein solches charakteristisches Merkmal, kann das Signal gespeichert und/oder zum Ermitteln eines Biodiversitätswerts verwendet werden.

Umfasst die Detektionseinheit eine optische Kamera, so kann sie konfiguriert sein, Videos definierter Länge von der Umgebung der Kamera zu erzeugen und die Videos auf die Anwesenheit von Gliederfüßern zu analysieren. Videoabschnitte, die keinen Gliederfüßer zeigen, können verworfen werden; aus Videoabschnitten, die einen oder mehrere Gliederfüßer zeigen, können Bilder extrahiert werden, um die Gliederfüßer zu lokalisieren und Teilbilder zu erzeugen, die nur jeweils einen Gliederfüßer zeigen. Es ist aber auch möglich, die Videoabschnitte, die einen oder mehrere Gliederfüßer zeigen, direkt zum Ermitteln eines Biodiversitätswerts zu verwenden.

Anhand der in dem Gebiet mittels der Detektionseinheit erfassten Signale sollen die Variabilität von Gliederfüßern in dem Gebiet und ein Biodiversitätswert ermittelt werden. Daher ist es möglich, dass eine große Anzahl von Signalen über einen langen Zeitraum hinweg erfasst werden muss, um einen aussagekräftigen Biodiversitätswert zu ermitteln. Mit anderen Worten: die Anzahl der erfassten Signale und/oder die Länge der Zeitspanne, in der Signale erfasst werden, kann auf der Grundlage der Häufigkeit und/oder Wahrscheinlichkeit bestimmt werden, mit der verschiedene Gliederfüßer in dem Gebiet in Erscheinung treten.

Signale können dauerhaft (kontinuierlich), zu bestimmten Zeiten und/oder in bestimmten Zeitabständen und/oder bei Eintreten bestimmter Ereignisse erfasst werden. Wenn sich ein Gliederfüßer zum Zeitpunkt der Signalerfassung in der Reichweite der Detektoreinheit und/oder eines Sensors der Detektoreinheit aufhält, wird seine Anwesenheit üblicherweise durch Merkmale in dem Signal erfasst. Wenn sich zum Zeitpunkt der Signalerfassung kein Gliederfüßer in der Reichweite der Detektoreinheit und/oder eines Sensors der Detektoreinheit aufhält, enthält das erfasste Signal üblicherweise keine Merkmale, die auf einen Gliederfüßer hinweisen. Solche Signale können verworfen werden.

In einer Ausführungsform der vorliegenden Offenbarung wird ein Biodiversitätswert auf der Grundlage der bisher erfassten Signale bestimmt und/oder aktualisiert. Wenn sich dieser Biodiversitätswert auch dann nicht ändert, wenn weitere Signale erfasst und hinzugefügt werden, oder sich nicht innerhalb eines vordefinierten Bereichs ändert, kann davon ausgegangen werden, dass die Anzahl der Signale und/oder die Länge der Zeitperiode ausreichend waren.

So kann beispielsweise ein neuer Biodiversitätswert immer dann ermittelt werden, wenn ein neues Signal erfasst wird. Ebenso ist es möglich, einen aktualisierten Biodiversitätswert zu ermitteln, wenn eine vorab festgelegte Anzahl von Signalen erfasst wurde, z.B. 5, 10, 20 oder eine andere Anzahl. Die Anzahl kann konstant sein oder davon abhängen, wie stark sich der Biodiversitätswert ändert, wenn neue Signale erfasst und bei der Ermittlung des Biodiversitätswerts berücksichtigt werden: wenn die Änderung groß ist, kann die Anzahl der Signale größer sein als bei einer geringeren Änderung.

Es ist auch möglich, den Biodiversitätswert zu festgelegten Zeitpunkten (z.B. einmal pro Stunde oder einmal pro Tag) in festgelegten Zeitabständen (z. B. alle 6 Stunden) und/oder bei Eintreten bestimmter Ereignisse zu bestimmen. Es ist möglich, dass diejenigen Signale, die seither erzeugt wurden, bei der Bestimmung des Biodiversitätswert berücksichtigt werden.

Wie beschrieben kann die Anwesenheit eines Gliederfüßers durch charakteristische Merkmale in einem erfassten Signal festgestellt werden. Es können Merkmalsanalysen durchgeführt werden, um solche charakteristischen Merkmale zu identifizieren. Im Fall eines Bildes als Signal können Mustererkennungsverfahren verwendet werden, um charakteristische Merkmale eines Gliederfüßers in dem Bild zu identifizieren.

In einer Ausführungsform der vorliegenden Offenbarung wird zur Detektion von Gliederfüßern auf Basis von Signalen ein trainiertes Modell des maschinellen Lernens verwendet.

Der Begriff "maschinelles Lernen" bezieht sich auf die Entwicklung von Algorithmen und statistischen Modellen, die von Computersystemen verwendet werden, um eine bestimmte Aufgabe ohne explizite Anweisungen auszuführen, und sich stattdessen auf Muster und Schlussfolgerungen zu stützen. Maschinelles Lernen wird als Teilbereich der künstlichen Intelligenz angesehen. Algorithmen für maschinelles Lernen erstellen ein mathematisches Modell auf der Grundlage von Beispieldaten, die als "Trainingsdaten" bezeichnet werden, um Vorhersagen und/oder Entscheidungen zu treffen, ohne explizit für die Ausführung der Aufgabe programmiert zu sein.

Der Begriff "Modell des maschinellen Lernens", wie er hier verwendet wird, kann als eine computerimplementierte Datenverarbeitungsarchitektur verstanden werden. Das Modell des maschinellen Lernens kann Eingabedaten empfangen und Ausgabedaten basierend auf diesen Eingabedaten und auf Parametern des Modells bereitstellen. Das Modell des maschinellen Lernens kann durch Training eine Beziehung zwischen Eingabedaten und Ausgabedaten erlernen. Beim Training können Parameter des Modells angepasst werden, um für eine bestimmte Eingabe eine gewünschte Ausgabe bereitzustellen.

Der Prozess des Trainings umfasst die Bereitstellung eines Lernalgorithmus und von Trainingsdaten. Der Begriff "trainiertes Modell des maschinellen Lernens" bezieht sich auf das Modellartefakt, das durch den Trainingsprozess erzeugt wird. Die Trainingsdaten umfassen üblicherweise eine korrekte Antwort, die als Zieldaten bezeichnet wird. Der Lernalgorithmus findet Muster in den Trainingsdaten, die die Eingabedaten den Zieldaten zuordnen, und erzeugt ein trainiertes Modell des maschinellen Lernens aus, das diese Muster erfasst hat.

Im Trainingsprozess werden Trainingsdaten in das Modell des maschinellen Lernens eingegeben und das maschinelle Lernmodell generiert eine Ausgabe. Die Ausgabe wird mit den (bekannten) Zieldaten verglichen. Die Parameter des Modells werden modifiziert, um die Abweichungen zwischen der Ausgabe und den Zieldaten auf ein (definiertes) Minimum zu reduzieren.

Eine Verlustfunktion kann verwendet werden, um die Abweichungen zwischen der Ausgabe und den Zieldaten zu quantifizieren. Das Ziel des Trainingsprozesses kann darin bestehen, die Parameter des Modells des maschinellen Lernens zu modifizieren (anzupassen), um die Verlustfunktion auf ein (definiertes) Minimum zu reduzieren. Die Verlustfunktion wird in der Regel mithilfe einer Optimierungsmethode minimiert, z.B. einer Gradienten-Methode.

Ein solches Modell des maschinellen Lernens kann konfiguriert sein und trainiert werden, ein Signal einer von mindestens zwei Klassen zuzuordnen (Klassifikationsmodell). Das Modell des maschinellen Lernens kann konfiguriert sein und trainiert werden, eine binäre Klassifizierung auszuführen, d.h. ein Signal einer von genau zwei Klassen zuzuordnen. Eine Klasse kann Signale repräsentieren, die keine Merkmale umfassen, die von einem Gliederfüßer stammen bzw. auf die Anwesenheit eines Gliederfüßers hindeuten, die andere Klasse kann Merkmale repräsentieren, die von einem oder mehreren Gliederfüßern stammen bzw. auf deren Anwesenheit hindeuten.

Das Modell des maschinellen Lernens kann ein Mehrklassen-Klassifizierungsmodell sein oder umfassen. Ein "Mehrklassen-Klassifizierungsmodell" ist konfiguriert und wird trainiert, ein Signal einer von mehreren (mehr als zwei) Klassen zuzuordnen. Die Zahl der Klassen kann beispielsweise 3, 4, 5, 6, 7, 8, 9, 10 oder mehr als 10 oder 100 oder mehr als 100 betragen.

Eine Klasse kann angeben, zu welcher Klasse, Ordnung, Familie, Gattung und/oder Art im Sinne der biologischen Taxonomie ein Gliederfüßer gehört, der durch ein Signal repräsentiert wird. Eine Klasse kann eine Kombination verschiedener biologischer Taxonomie-Ebenen sein. Eine Klasse kann beispielsweise als eine Gruppe von Arten oder als eine Vereinigung von zwei oder mehr Familien definiert werden.

Das Modell des maschinellen Lernens wird anhand von Trainingsdaten trainiert. Die Trainingsdaten umfassen eine Vielzahl von Referenz-Signalen als Eingabedaten. Jedes Referenz-Signal der Vielzahl von Referenz-Signalen kann einen Gliederfüßer repräsentieren. Es ist möglich, dass ein oder mehrere Referenz-Signale mehr als einen Gliederfüßer repräsentiert.

Der Begriff "Vielzahl von Referenz-Signalen" bedeutet mehr als 10, z.B. mehr als 100 oder sogar mehr als 1000.

Der Begriff "Referenz-Signal" wird in dieser Offenbarung verwendet, um Signale, die zum Trainieren des Modells des maschinellen Lernens verwendet werden, von Signalen zu unterscheiden, die bei der Verwendung des trainierten Modells des maschinellen Lernens verwendet werden. Der Begriff "Referenz-" hat ansonsten keine andere einschränkende Bedeutung. Der Begriff "Referenz-Signal" wird verwendet, um Einwände wegen mangelnder Klarheit im Prüfungsverfahren der vorliegenden Patentanmeldung zu vermeiden.

Die Trainingsdaten umfassen ferner für jedes Referenz-Signal der Vielzahl von Referenz-Signalen eine Information über eine Klasse, zu der der durch das Referenz-Signal repräsentierte Gliederfüßer gehört (Klasseninformation) als Zieldaten.

Das Training des maschinellen Lernmodells umfasst in der Regel die folgenden Schritte:
für jedes Referenz-Signal der Vielzahl von Referenz-Signalen:
- Eingabe des Referenz-Signals in das Modell des maschinellen Lernens;
- Empfangen einer Ausgabe von dem Modell des maschinellen Lernens, wobei die Ausgabe die Klasse angibt, der das Modell des maschinellen Lernens das Referenz-Signal zugeordnet hat;
- Bestimmen einer Abweichung zwischen der Ausgabe und den Zieldaten;
- Reduzieren der Abweichung durch Modifizierung von Parametern des Modells des maschinellen Lernens.

Die Trainingsschritte können durchgeführt werden, bis ein Stoppkriterium erreicht ist. Ein solches Stoppkriterium kann beispielsweise sein: eine vorgegebene maximale Anzahl von Trainingsschritten/Zyklen/Epochen wurde durchgeführt, Abweichungen zwischen Ausgabe und Zieldaten können nicht mehr durch Modifizieren der Modellparameter reduziert werden, ein vorgegebenes Minimum einer Verlustfunktion ist erreicht und/oder ein Extremwert (z. B. Maximum oder Minimum) eines anderen Leistungswerts ist erreicht.

In der Regel werden Referenz-Signale verschiedener Gliederfüßer verwendet, um das Modell des maschinellen Lernens zu trainieren. Je unterschiedlicher die Gliederfüßer in den Referenz-Signalen repräsentiert sind, desto mehr Merkmale lernt das Modell, um zwischen verschiedenen Gliederfüßern zu unterscheiden.

Das Modell des maschinellen Lernens klassifiziert ein (Referenz-)Signal üblicherweise auf Basis eines Merkmalvektors. Ein solcher Merkmalvektor, manchmal auch als "Embedding" bezeichnet, ist eine numerische Darstellung eines Objekts. Die numerische Darstellung ist in der Regel eine Anordnung von Zahlen, wie z.B. ein Vektor, eine Matrix, ein Tensor oder eine andere Anordnung von Zahlen. Mit anderen Worten: der Begriff Merkmalsvektor ist nicht auf Vektoren beschränkt, sondern kann auch andere Anordnungen von Zahlen umfassen.

In einer Ausführungsform der vorliegenden Offenbarung ist der Merkmalvektor ein eindimensionales Array mit fester Größe aus reellen Zahlen.

In einer Ausführungsform der vorliegenden Offenbarung hat der Merkmalvektor eine Anzahl von Dimensionen, die größer als 100 ist, beispielsweise größer als 200 oder größer als 500 oder größer als 700.

Ein solcher Merkmalvektor kann ein Signal und damit einen Gliederfüßer repräsentieren. Ein solcher Merkmalvektor wird üblicherweise von einem Modell des maschinellen Lernens erzeugt. Es ist eine Repräsentation der Eingabedaten, die es dem Modell erlaubt, die erlernte Aufgabe (z.B. eine Klassifizierung) auszuführen. Während des Trainings erlernt das Modell, wie der Merkmalvektor auf Basis der Eingabedaten erzeugt wird.

Das Modell des maschinellen Lernens kann konfiguriert und trainiert werden, das Referenz-Signal zu analysieren, Merkmale zu extrahieren und diese in einem Merkmalvektor zusammenzufassen.

Dies sei am Beispiel von Bildern als Signale und einem Convolutional Neural Network als Modell des maschinellen Lernens erläutert, ohne die vorliegende Offenbarung auf diese Ausführungsform beschränken zu wollen.

Convolutional Neural Networks (CNNs) sind eine Klasse von künstlichen neuronalen Netzwerken, die besonders leistungsfähig für Aufgaben im Bereich der Bildverarbeitung sind, wie z.B. Objekterkennung. Sie können räumliche Hierarchien von Merkmalen aus Eingabebildern automatisch und adaptiv erlernen. CNNs bestehen aus Schichten, die Operationen auf dem Eingabebild ausführen. Zu den primären Schichten gehören Faltungsschichten, Pooling-Schichten und vollständig verbundene Schichten. Die Faltungsschichten wenden Filter (auch als Kernel bezeichnet) auf das Eingabebild an, um Merkmalskarten zu erstellen. Die Filter können so konzipiert sein, dass sie bestimmte Merkmale wie Kanten, Texturen und/oder komplexere Muster erkennen. Pooling-Schichten reduzieren die Dimensionalität der Merkmalskarten, wodurch die Erkennung von Merkmalen unabhängig von Skalierung und Ausrichtung wird und die Rechenlast verringert wird. Gegen Ende des Netzwerks aggregieren vollständig verbundene Schichten die Daten aus den Merkmalskarten. Die Ausgabe einer der letzten vollständig verbundenen Schichten kann als Merkmalvektor dienen.

In einer Ausführungsform der vorliegenden Offenbarung ist das maschinelle Lernmodell so konfiguriert und wurde so trainiert, dass es Gliederfüßer in (Referenz-)Bildern lokalisiert und klassifiziert.

Der Begriff "lokalisieren" bezieht sich auf das Auffinden der Position eines Objekts in einem Bild. Die Objektlokalisierung beantwortet die Frage, wo sich ein Objekt in einem Bild befindet.

Der Begriff "klassifizieren" bezieht sich auf die Zuordnung eines Objekts zu einer definierten Klasse und/oder Kategorie. Die Objektklassifizierung kann die Frage beantworten, was sich in dem Bild befindet.

In der vorliegenden Offenbarung bezieht sich der Begriff "Objekt" auf einen Gliederfüßer.

Die Lokalisierung kann beispielsweise durch die Angabe eines Begrenzungsrahmens um einen in einem (Referenz-)Bild dargestellten Gliederfüßer erfolgen.

Ein "Begrenzungsrahmen" kann ein rechteckiger Rahmen sein, der durch die Koordinaten seiner Ecken definiert ist und ein Objekt von Interesse innerhalb eines Bildes einschließt. Der Begrenzungsrahmen wird durch seine Position charakterisiert, die in der Regel durch die Koordinaten der oberen linken Ecke (x₁, y₁) und der unteren rechten Ecke (x₂, y₂) oder alternativ durch die Koordinaten des Mittelpunkts (cx, cy) zusammen mit seiner Breite (w) und Höhe (h) angegeben wird. Der Begrenzungsrahmen dient als räumliche Darstellung, die die Ausdehnung des Objekts abgrenzt und dessen Identifizierung und/oder Analyse ermöglicht.

Begrenzungsrahmen werden häufig verwendet, um Objekte in Bildern zu markieren. Es sei angemerkt, dass der Begrenzungsrahmen nicht unbedingt rechteckig sein muss; auch andere geometrische Formen eignen sich zur Markierung von Objekten, z.B. Kreise, Ellipsen, Sechsecke oder andere Formen. In dieser Hinsicht ist der Begriff "Begrenzungsrahmen" weit auszulegen und nicht auf rechteckige Rahmen beschränkt.

Um ein solches Modell des maschinellen Lernens zu trainieren, enthalten die Trainingsdaten in der Regel neben Referenz-Bildern und einer Angabe, welcher Klasse diese angehören, zusätzliche Zieldaten in Form von Informationen darüber, wo sich Gliederfüßer in den Referenz-Bildern befinden (z.B. in Form von Koordinaten von Begrenzungsrahmen).

Das Modell des maschinellen Lernens kann konfiguriert sein und trainiert werden, Referenz-Bilder zu segmentieren, d.h. Bildelemente (z.B. Pixel), die einen Gliederfüßer repräsentieren, von anderen Bildelementen zu unterscheiden. Um ein solches Modell zu trainieren, enthalten die Trainingsdaten in der Regel zusätzliche Zieldaten in Form von Informationen darüber, welche Bildelemente (z.B. Pixel) einen Gliederfüßer darstellen (z.B. in Form von Segmentierungsmasken).

Das Training eines Modells des maschinellen Lernens zur Objekterkennung kann die folgenden Schritte umfassen:
für jedes Referenzbild der Vielzahl von Referenzbildern:
- Eingabe des Referenzbildes in das Modell des maschinellen Lernens;
- Empfangen einer Ausgabe von dem Modell des maschinellen Lernens, wobei die Ausgabe den Ort und die Klasse einer oder mehrerer Gliederfüßer angibt, die in dem Referenzbild dargestellt sind;
- Vergleichen der Ausgabe mit den Zieldaten, d.h. Vergleichen eines vorhergesagten Ortes des Gliederfüßers in dem Referenzbild mit dem tatsächlichen Ort des Gliederfüßers in dem Referenzbild und Vergleichen einer vorhergesagten Klasse des lokalisierten Gliederfüßers mit der tatsächlichen Klasse des lokalisierten Gliederfüßers;
- Bestimmen einer Abweichung zwischen dem Ergebnis des Vergleichs und den Zieldaten, d.h. Bestimmen einer ersten Abweichung zwischen dem vorhergesagten Ort und dem tatsächlichen Ort und einer zweiten Abweichung zwischen der vorhergesagten Klasse und der tatsächlichen Klasse,
- Reduzieren der Abweichung(en) durch Änderung der Parameter des Modells des maschinellen Lernens.

Die Abweichung(en) kann/können mithilfe einer Verlustfunktion (oder mehreren Verlustfunktionen) bestimmt werden.

Das Training eines Modells zur Objekterkennung in Bildern kann die Vorhersage der Koordinaten eines Begrenzungsrahmens beinhalten, der das betreffende Objekt umschließt. Diese Aufgabe erfordert eine Verlustfunktion, die den Unterschied zwischen den vorhergesagten Begrenzungsrahmenkoordinaten und dem tatsächlichen Begrenzungsrahmenkoordinaten effektiv quantifizieren kann. Geeignete Verlustfunktionen sind: mittlerer quadratischer Fehler (*Mean Squared Error* (MSE)), Schnittmenge über Vereinigung (*Intersection over Union* (IoU)), L1-Verlust und/oder Huber-Verlust oder Kombinationen davon.

Beispiele für Klassifizierungsverluste sind binäre Kreuzentropie (*Binary Cross Entropy*) und negative Log-Likelihood.

Der Gesamtverlust kann eine Summe aus Lokalisierungsverlust und Klassifizierungsverlust sein. Die Verluste können gewichtet werden. Die Gewichtungen können während des Trainings variieren.

Die Trainingsschritte können durchgeführt werden, bis ein Stoppkriterium erreicht ist. Ein solches Stoppkriterium kann beispielsweise sein: eine vorab festgelegte maximale Anzahl von Trainingsschritten/-zyklen/-epochen wurde durchgeführt, Abweichungen zwischen Ausgabe und Zieldaten können nicht mehr durch Änderung der Modellparameter reduziert werden, ein vorab festgelegtes Minimum der Verlustfunktion wird erreicht und/oder ein Extremwert (z.B. Maximum oder Minimum) eines anderen Leistungswerts wird erreicht.

Im Stand der Technik sind verschiedene Modelle zur Lokalisierung und/oder Klassifizierung von Objekten auf der Grundlage von Bildern offenbart.

Zum Beispiel kann das Modell des maschinellen Lernens ein R-CNN-Modell sein oder umfassen (siehe z.B. R. Girshick et al.: Rich feature hierarchies for accurate object detection and semantic segmentation, arXiv:1311.2524v5).

Das Modell des maschinellen Lernens kann ein Fast R-CNN- oder ein Faster R-CNN-Modell sein oder umfassen (siehe z.B. R. Girshick: Fast R-CNN, arXiv:1504.08083v2; S. Ren et al.: Faster R-CNN: Towards Real-Time Object Detection with Region Proposal Networks, arXiv:1506.01497v3).

Das Modell des maschinellen Lernens kann ein YOLO-Modell sein oder ein solches umfassen (siehe z.B. J. Redmon et al.: You Only Look Once: Unified, Real-Time Object Detection, arXiv:1506.02640v5).

Das Modell des maschinellen Lernens kann ein SSD-Modell sein oder umfassen (siehe z.B. W. Liu et al.: SSD: Single Shot MultiBox Detector, arXiv:1512.02325v5).

Das Modell des maschinellen Lernens kann ein DETR-Modell sein oder ein solches umfassen (siehe z.B. N. Carion et al.: End-to-End Object Detection with Transformers, arXiv:2005.12872v3).

Die hier erwähnten Modelle sind lediglich Beispiele. Es gibt viele andere Modelle, die für die Objektlokalisierung und/oder -klassifizierung und somit als Modell des maschinellen Lernens der vorliegenden Offenbarung verwendet werden können. Die hier genannten Modelle sind auch nicht auf Bilder als Signale beschränkt; sie können auch auf Basis von anderen Signalen trainiert werden.

In einem weiteren Schritt wird ein Biodiversitätswerts auf Basis der detektierten Gliederfüßer ermittelt.

Der Biodiversitätswert ist ein Maß für die Biodiversität in dem Gebiet. Der Biodiversitätswert korreliert üblicherweise positiv mit der Biodiversität in dem Gebiet, d.h. je größer die Biodiversität ist, desto größer ist der Biodiversitätswert. Grundsätzlich ist es aber auch möglich, dass der Biodiversitätswert negativ mit der Biodiversität korreliert. Der Einfachheit halber wird in dieser Offenbarung davon ausgegangen, dass der Biodiversitätswert positiv mit der Biodiversität korreliert, ohne die Offenbarung auf diese Ausführungsform beschränken zu wollen.

Der Biodiversitätswert wird auf Basis der erfassten Signale ermittelt.

In einer Ausführungsform der vorliegenden Offenbarung werden die erfassten (und ggf. separierten und/oder vorverarbeiteten und/oder in Teilsignale aufgeteilten) Signale einem trainierten Modell des maschinellen Lernens zugeführt. Das trainierte Modell des maschinellen Lernens ist konfiguriert und wurde trainiert, auf Basis eines Signals einen Merkmalvektor zu erzeugen, der den durch das Signal repräsentierten Gliederfüßer repräsentiert.

Das trainierte Modell des maschinellen Lernens kann das oben beschriebene Klassifikationsmodell oder Objekterkennungsmodell sein oder umfassen. Es kann aber auch ein anderes Modell des maschinellen Lernens sein. Entscheidend ist, dass das Modell in einem Training gelernt hat, was einen Gliederfüßer ausmacht und/oder wie sich verschiedene Gliederfüßer unterscheiden. Die Aufgabe, die das Modell des maschinellen Lernens in dem Training ausführt, kann eine Klassifikation, eine Objekterkennung, eine Segmentierung, eine Rekonstruktion, eine Unterscheidung (kontrastives Lernen) und/oder eine andere Aufgabe und/oder eine Kombination von Aufgaben sein. Die Aufgabe ist zweitrangig und dient lediglich dem Trainieren des Modells, ein "Verständnis" über Gliederfüßer, ihre Merkmale und/oder ihre Unterschiede zu erlangen. Die von dem Modell zur Erfüllung der Aufgabe erzeugten Merkmalvektoren werden im Fall der vorliegenden Offenbarung verwendet, um einen Biodiversitätswert zu ermitteln.

In einer Ausführungsform der vorliegenden Offenbarung ist der Biodiversitätswert ein Maß für die Variabilität der Merkmalvektoren der über die Zeitspanne in dem Gebiet erfassten Signale im Rahmen der Detektion von Gliederfüßern. Mit anderen Worten: von jedem erfassten Signal kann mit Hilfe eines trainierten Modells des maschinellen Lernens ein Merkmalvektor erzeugt werden. Der Biodiversitätswert kann dann auf Basis aller Merkmalvektoren ermittelt werden.

Der Biodiversitätswert kann ein Maß für die Variabilität der verfügbaren Merkmalvektoren sein.

Wenn die Merkmalvektoren Vektoren in einem n-dimensionalen Raum sind (wobei n größer als 100 sein kann, z. B. größer als 200 oder größer als 500), definiert jeder Vektor einen Punkt in diesem Raum und der Biodiversitätswert kann ein Maß für die Verteilung der Punkte in diesem Raum sein.

Die Quantifizierung der Variabilität von Vektoren in einem Vektorraum kann durch verschiedene statistische und mathematische Verfahren erfolgen.

Der Biodiversitätswert kann z.B. die Varianz der Merkmalvektoren sein oder darauf basieren. Die Varianz misst, wie weit ein Satz von Zahlen (oder Vektoren) von der mittleren Zahl (oder dem mittleren Vektor) entfernt ist. In einem Vektorraum kann die Varianz der Vektoren durch die Ermittlung des Durchschnitts der quadratischen Differenzen vom mittleren Vektor bestimmt werden. Je größer die Varianz, desto höher der Biodiversitätswert.

Der Biodiversitätswert kann die Standardabweichung der Merkmalvektoren sein oder darauf basieren. Die Standardabweichung ist die Quadratwurzel der Varianz. Sie ist ein Maß für die Streuung oder Dispersion einer Reihe von Werten. Eine niedrige Standardabweichung zeigt an, dass die Werte tendenziell nahe am Mittelwert liegen, während eine hohe Standardabweichung anzeigt, dass die Werte über einen größeren Bereich verteilt sind. Je größer die Standardabweichung der Merkmalvektoren, desto höher der Biodiversitätswert.

Der Biodiversitätswert kann auf Eigenwerten und/oder Eigenvektoren der Merkmalvektoren basieren. Solche Eigenwerte und Eigenvektoren werden in der Hauptkomponentenanalyse (PCA) verwendet, einer Technik, die häufig zur Reduzierung der Dimensionalität von Daten eingesetzt wird. Die Eigenwerte stellen die Varianzen der Variablen in einem neuen Koordinatensystem dar, und die Eigenvektoren definieren dieses neue Koordinatensystem. Je größer der Eigenwert, desto mehr Variabilität gibt es in den Daten entlang des entsprechenden Eigenvektors.

Der Biodiversitätswert kann auf der Singulärwertzerlegung (*Singular Value Decomposition* (SVD)) der Merkmalvektoren basieren: Dies ist eine Methode, die in der linearen Algebra verwendet wird, um eine Matrix in Singulärwerte und Singulärvektoren zu zerlegen. Die aus der SVD gewonnenen Singulärwerte stellen die Größe oder Energie der entsprechenden Merkmalvektoren dar. Dies kann zur Quantifizierung der Variabilität verwendet werden.

Der Biodiversitätswert kann auch die Entropie der Merkmalvektoren sein oder darauf basieren. Entropie ist ein Konzept, das in der Physik und Informationstheorie verwendet wird, um das Ausmaß der Unsicherheit oder Zufälligkeit in einem Datensatz zu quantifizieren. Je höher die Entropie, desto höher die Unsicherheit oder Zufälligkeit und desto höher der Biodiversitätswert.

Der Biodiversitätswert kann ausgegeben (z.B. auf einem Monitor angezeigt und/oder mit einem Drucker ausgedruckt, in einem Datenspeicher gespeichert und/oder an ein separates Computersystem übertragen) werden.

Der Biodiversitätswert kann zur Schätzung und/oder Quantifizierung der Biodiversität in einem Gebiet oder einer Region verwendet werden.

Der Biodiversitätswert kann verwendet werden, um die Biodiversität auf einem Feld für den Anbau von Kulturpflanzen und/oder in der Nähe eines solchen Feldes, in einem Gewächshaus, in einem Folientunnel, in einem Obstgarten, in einer Plantage und/oder in einem anderen Gebiet oder einer anderen Region abzuschätzen und/oder zu quantifizieren.

Der Biodiversitätswert kann verwendet werden, um die Biodiversität zweier Gebiete zu vergleichen; das Gebiet mit einem höheren Biodiversitätswert weist üblicherweise eine höhere Biodiversität auf.

Der Biodiversitätswert kann verwendet werden, um Handlungsempfehlungen zu geben. Wenn der Biodiversitätswert beispielsweise unter einem vordefinierten Schwellenwert liegt oder unter einen solchen Schwellenwert fällt, können Maßnahmen ergriffen werden, um die Biodiversität zu erhöhen. Ein solcher Schwellenwert kann von einem Experten (z.B. einem Biologen) oder einer staatlichen Behörde (z.B. einer Regulierungsbehörde) festgelegt werden. In der Landwirtschaft können beispielsweise Blühstreifen angelegt werden, die Insekten anlocken und so die Biodiversität erhöhen. Bestimmte Arten, d.h. Nützlinge, können in dem Gebiet aktiv freigesetzt werden.

Mit dem Biodiversitätswert kann die Auswirkung einer Maßnahme auf die Biodiversität bestimmt werden. Ein Biodiversitätswert kann vor der Maßnahme und nach der Maßnahme bestimmt werden. Ist der Biodiversitätswert nach der Maßnahme niedriger als vor der Maßnahme, hat die Maßnahme einen negativen Einfluss auf die Biodiversität; es könnte notwendig sein, Gegenmaßnahmen zu ergreifen. Ist der Biodiversitätswert nach der Maßnahme höher als vor der Maßnahme, hat die Maßnahme einen positiven Einfluss auf die Biodiversität; die Maßnahme kann als Erfolg gewertet werden.

Selbst wenn der Biodiversitätswert nur auf der Grundlage von Signalen ermittelt wurde, die eine begrenzte Anzahl von Gliederfüßern repräsentieren, kann er dennoch eine gute Schätzung der Biodiversität im Allgemeinen sein, da Arten andere Arten anziehen. Mit anderen Worten: selbst wenn der Biodiversitätswert nur auf der Grundlage von Signalen ermittelt wurde, die eine begrenzte Anzahl von Gliederfüßern repräsentieren, kann er dennoch repräsentativ für andere Organismen sein.

Ein weiterer Gegenstand der vorliegenden Offenbarung ist eine Vorrichtung. Die Vorrichtung umfasst eine Detektionseinheit zum Detektieren von Gliederfüßern. Die Detektionseinheit umfasst einen oder mehrere Sensoren, die Signale erzeugen. Die Detektionseinheit kann eine Kamera, ein Mikrofon, einen LiDAR-Sensor, einen Gaschromatograph, ein Massenspektrometer und/oder ein Nanotube umfassen.

Die Vorrichtung umfasst ferner ein Computersystem.

Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Heutige Computersysteme werden häufig in Desktop-PCs, tragbare PCs, Laptops, Notebooks, Netbooks und Tablet-PCs sowie sogenannte Handhelds (z. B. Smartphone) unterteilt; alle diese Systeme können für die Durchführung der hier beschriebenen computerimplementierten Verfahren verwendet werden.

Der Begriff "Computer" soll weit ausgelegt werden und jede Art von elektronischem Gerät mit Datenverarbeitungsfähigkeiten umfassen, einschließlich, als nicht einschränkende Beispiele, Personal Computer, Server, eingebettete Kerne, Kommunikationsgeräte, Prozessoren (z.B. digitale Signalprozessoren (DSP), Mikrocontroller, feldprogrammierbare Gate-Arrays (FPGA), anwendungsspezifische integrierte Schaltkreise (ASIC) usw.) und andere elektronische Rechengeräte.

Der Begriff "verarbeiten" soll jede Art von Berechnung oder Manipulation oder Umwandlung von Daten umfassen, die als physikalische, z.B. elektronische, Phänomene dargestellt werden und z.B. in Registern und/oder Speichern mindestens eines Computers oder Prozessors auftreten oder gespeichert werden können. Der Begriff "Prozessor" umfasst eine einzelne Verarbeitungseinheit oder eine Vielzahl verteilter oder entfernter solcher Einheiten.

Das Computersystem ist konfiguriert, die Signale zu verarbeiten. Das Computersystem ist konfiguriert, auf Basis der Signale einen Biodiversitätswert zu ermitteln und den Biodiversitätswert auszugeben, zu speichern und/oder an ein separates Computersystem zu übermitteln.

Das Computersystem kann ein integraler Bestandteil der Detektionseinheit sein. Ebenso ist es möglich, dass das Computersystem ein separater Bestandteil der Vorrichtung ist und mit der Detektionseinheit verbunden ist. Eine solche Verbindung kann über Kabel oder kabellos (beispielsweise über Funk) erfolgen.

Die Vorrichtung kann einen oder mehrere Sammelbereiche umfassen.

Die Vorrichtung kann eine oder mehrere Quellen für elektromagnetische Strahlung umfassen.

Die Vorrichtung kann mit einem oder mehreren Lockmitteln ausgerüstet sein.

Die Vorrichtung kann eine Sendeeinheit umfassen, um Informationen über ein Netzwerk an ein separates Computersystem zu übermitteln. Diese Informationen können beispielsweise Signale sein. Diese Informationen können Ergebnisse einer Analyse von Signalen umfassen. Diese Informationen können Biodiversitätswerte umfassen. Diese Informationen können Mitteilungen zum Status der Vorrichtung und/oder seiner Komponenten umfassen. Diese Informationen können Mitteilungen zum Status der Vorrichtung und/oder seiner Komponenten umfassen. Diese Informationen können zum Standort der Vorrichtung sein.

Die Sendeeinheit kann so ausgestaltet sein, dass sie Informationen über ein Mobilfunknetz (z.B. GSM: *Global System for Mobile Communications,* GPRS: *General Packet Radio Service*; UMTS: *Universal Mobile Telecommunications System,* LTE: *Long Term Evolution*), über ein WLAN (*Wireless Local Artea Network*), über Bluetooth, über DECT (*Digital Enhanced Cordless Telecommunications*) über ein Low-Power-Wide-Area-Netzwerk (*Low Power Wide Area Network* (LPWAN oder LPN)) wie beispielsweise ein NarrowBand IoT Netzwerk und/oder über eine Kombination aus verschiedenen Übertragungswegen übermittelt.

Die Sendeeinheit kann so ausgestaltet sein, dass sie Informationen über eine kurzreichweitige Funkverbindung (z.B. Bluetooth) an eine Basisstation übermittelt, von der die Informationen dann kabelgebunden und/oder über eine langreichweitige Funkverbindung (z.B. ein Mobilfunknetz) weitergeleitet werden.

Die Vorrichtung kann eine Empfangseinheit umfassen, um Informationen über ein Netzwerk zu empfangen. Diese Informationen können Softwareupdates, Statusabfragen und/oder andere/weitere Informationen sein. Die Empfangseinheit kann so ausgestaltet sein, dass sie Informationen über ein Mobilfunknetz empfängt. Die Sendeeinheit und die Empfangseinheit können Bestandteile einer Sende- und Empfangseinheit sein.

Die Vorrichtung kann über Mittel zur Standortbestimmung verfügen. Diese Mittel können einen GPS-Empfänger (GPS: Globales Positionsbestimmungssystem) umfassen.

Ein weiterer Gegenstand der vorliegenden Offenbarung ist ein System. Ein solches System umfasst mindestens eine Detektionseinheit zum Detektieren von Gliederfüßern und ein Computersystem zum Verarbeiten von Signalen, die von der Detektionseinheit erfasst und ggf. übermittelt werden. Das Computersystem ist konfiguriert, auf Basis der Signale einen Biodiversitätswert zu ermitteln und diesen auszugeben, zu speichern und/oder an ein separates Computersystem zu übermitteln.

Der Unterschied zwischen einer Vorrichtung der vorliegenden Offenbarung und einem System der vorliegenden Offenbarung ist, dass das System mehrere Detektionseinheiten umfasst, die üblicherweise örtlich voneinander getrennt sind, und/oder dass eine Detektionseinheit und ein Computersystem keine gemeinsame Vorrichtung bilden. Es ist z.B. möglich, dass das System der vorliegenden Offenbarung eine Detektionseinheit umfasst, die in einem Gebiet stationiert ist. Die Detektionseinheit kann eine Sendeeinheit umfassen, die Signale an ein separates Computersystem übermittelt. Das separate Computersystem kann ein Bestandteil des Systems sein, ist aber örtlich von der Detektionseinheit getrennt und befindet sich üblicherweise nicht in dem Gebiet, in dem die Detektionseinheit stationiert ist.

Ein System im Sinne der vorliegenden Offenbarung kann auch mehrere (mindestens zwei) Vorrichtungen der vorliegenden Offenbarung umfassen.

Mehrere Detektoreinheiten und/oder Vorrichtungen können in dem Gebiet verteilt werden. Die Verwendung mehrerer, in dem Gebiet verteilten Detektoreinheiten/Vorrichtungen erhöht die Wahrscheinlichkeit von Gliederfüßern in der Reichweite einer solchen Detektoreinheit/Vorrichtung und damit die Verkürzung der Zeitspanne, in der Signale zur Ermittlung des Biodiversitätswerts erfasst werden.

Mehrere Detektoreinheiten/Vorrichtungen können ein vermaschtes Netz (engl. *mesh*) bilden, d.h. Informationen können von einer Detektoreinheit/Vorrichtung zur anderen weitergeleitet werden. Eine spezifische Detektoreinheit/Vorrichtung kann in der Nähe einer Basisstation positioniert sein oder über Mittel zur Übertragung von Informationen über eine größere Distanz als die Distanz zwischen den einzelnen Detektoreinheiten/Vorrichtungen, die das vermachte Netz bilden, verfügen (siehe z.B. WO2020/058170A1).

Ein weiterer Gegenstand der vorliegenden Offenbarung ist ein computerimplementiertes Verfahren. Das computerimplementierte Verfahren umfasst die folgenden Schritte:
- Bereitstellen eines trainierten Modells des maschinellen Lernens;
- Bereitstellen einer Vielzahl von Signalen eines Gebietes, wobei jedes Signal einen Gliederfüßer in dem Gebiet repräsentiert;
- für jedes Signal der Vielzahl von Signalen:
   ∘ Eingeben des Signals in das trainierte Modell des maschinellen Lernens;
   ∘ Empfangen eines Merkmalvektors von dem trainierten Modell des maschinellen Lernens;
- Ermitteln eines Biodiversitätswerts auf Basis der Merkmalvektoren;
- Ausgeben und/oder Speichern des Biodiversitätswerts und/oder Übermitteln des Biodiversitätswerts an ein separates Computersystem und/oder Ermitteln einer Maßnahme auf Basis des Biodiversitätswerts.

Ein weiterer Gegenstand der vorliegenden Offenbarung ist ein nicht-flüchtiges computerlesbares Speichermedium, auf dem ein Computerprogramm gespeichert ist, das, wenn es von einem Computersystem ausgeführt wird, das Computersystem veranlasst, folgende Schritte auszuführen:
- Bereitstellen eines trainierten Modells des maschinellen Lernens;
- Bereitstellen einer Vielzahl von Signalen eines Gebietes, wobei jedes Signal einen Gliederfüßer in dem Gebiet repräsentiert;
- für jedes Signal der Vielzahl von Signalen:
   ∘ Eingeben des Signals in das trainierte Modell des maschinellen Lernens;
   ∘ Empfangen eines Merkmalvektors von dem trainierten Modell des maschinellen Lernens;
- Ermitteln eines Biodiversitätswerts auf Basis der Merkmalvektoren;
- Ausgeben und/oder Speichern des Biodiversitätswerts und/oder Übermitteln des Biodiversitätswerts an ein separates Computersystem und/oder Ermitteln einer Maßnahme auf Basis des Biodiversitätswerts.

Ein weiterer Gegenstand der vorliegenden Offenbarung ist ein Computersystem, das konfiguriert ist,
- ein trainiertes Modell des maschinellen Lernens bereitzustellen;
- eine Vielzahl von Signalen eines Gebietes bereitzustellen, wobei jedes Signal einen Gliederfüßer in dem Gebiet repräsentiert;
- jedes Signal der Vielzahl von Signalen in das trainierte Modell des maschinellen Lernens einzugeben;
- für jedes in das Modell des maschinellen Lernens eingegebene Signal einen Merkmalvektor von dem trainierten Modell des maschinellen Lernens zu empfangen;
- einen Biodiversitätswert auf Basis aller Merkmalvektoren zu ermitteln;
- den Biodiversitätswert auszugeben und/oder zu speichern und/oder an ein separates Computersystem zu übermitteln und/oder eine Maßnahme auf Basis des Biodiversitätswerts zu ermitteln.

Ausführungsformen der vorliegenden Offenbarung sind:
1. Ein Verfahren umfassend:
   - Positionieren mindestens einer Detektionseinheit für Gliederfüßer in einem Gebiet;
   - Detektieren einer Vielzahl an Gliederfüßern in einer Zeitspanne;
   - Ermitteln eines Biodiversitätswerts auf Basis der detektierten Gliederfüßer;
   - Ausgeben und/oder Speichern des Biodiversitätswerts und/oder Übermitteln des Biodiversitätswerts an ein separates Computersystem und/oder Ermitteln einer Maßnahme auf Basis des Biodiversitätswerts.
2. Das Verfahren gemäß der Ausführungsform 1, wobei das Verfahren ferner umfasst:
   - Beleuchten eines Sammelbereichs mit elektromagnetischer Strahlung.
3. Das Verfahren gemäß der Ausführungsform 1, wobei das Verfahren ferner umfasst:
   - abwechselndes Beleuchten eines Sammelbereichs mit verschiedener elektromagnetischer Strahlung, die ein unterschiedliches Spektrum im infraroten, sichtbaren und/oder ultravioletten Bereich aufweisen.
4. Das Verfahren gemäß einer der Ausführungsformen 1 bis 3, wobei das Verfahren ferner umfasst:
   - Präsentieren von Oberflächen mit unterschiedlichen Farben.
5. Das Verfahren gemäß einer der Ausführungsformen 1 bis 4, wobei das Verfahren ferner umfasst:
   - abwechselndes Präsentieren von verschiedenen Oberflächen, die sich in ihrer Farbe unterscheiden.
6. Ein computerimplementiertes Verfahren umfassend:
   - Bereitstellen eines trainierten Modells des maschinellen Lernens;
   - Bereitstellen einer Vielzahl von Signalen eines Gebietes, wobei jedes Signal einen Gliederfüßer in dem Gebiet repräsentiert:
   - für jedes Signal der Vielzahl von Signalen:
      ∘ Eingeben des Signals in das trainierte Modell des maschinellen Lernens;
      ∘ Empfangen eines Merkmalvektors von dem trainierten Modell des maschinellen Lernens, wobei der Merkmalvektor einen Gliederfüßer repräsentiert;
   - Ermitteln eines Biodiversitätswerts auf Basis der Merkmalvektoren;
   - Ausgeben und/oder Speichern des Biodiversitätswerts und/oder Übermitteln des Biodiversitätswerts an ein separates Computersystem und/oder Ermitteln einer Maßnahme auf Basis des Biodiversitätswerts.
7. Ein nicht-flüchtiges computerlesbares Speichermedium, auf dem ein Computerprogramm gespeichert ist, das, wenn es von einem Computersystem ausgeführt wird, das Computersystem veranlasst, folgende Schritte auszuführen:
   - Bereitstellen eines trainierten Modells des maschinellen Lernens;
   - Bereitstellen einer Vielzahl von Signalen eines Gebietes, wobei jedes Signal einen Gliederfüßer in dem Gebiet repräsentiert;
   - für jedes Signal der Vielzahl von Signalen:
      ∘ Eingeben des Signals in das trainierte Modell des maschinellen Lernens;
      ∘ Empfangen eines Merkmalvektors von dem trainierten Modell des maschinellen Lernens, wobei der Merkmalvektor einen Gliederfüßer repräsentiert;
   - Ermitteln eines Biodiversitätswerts auf Basis der Merkmalvektoren;
   - Ausgeben und/oder Speichern des Biodiversitätswerts und/oder Übermitteln des Biodiversitätswerts an ein separates Computersystem und/oder Ermitteln einer Maßnahme auf Basis des Biodiversitätswerts.
8. Ein Computersystem, das konfiguriert ist,
   - ein trainiertes Modell des maschinellen Lernens bereitzustellen;
   - eine Vielzahl von Signalen eines Gebietes bereitzustellen, wobei jedes Signal einen Gliederfüßer in dem Gebiet repräsentiert;
   - jedes Signal der Vielzahl von Signalen in das trainierte Modell des maschinellen Lernens einzugeben,
   - für jedes in das Modell des maschinellen Lernens eingegebene Signal einen Merkmalvektor von dem trainierten Modell des maschinellen Lernens zu empfangen;
   - einen Biodiversitätswert auf Basis aller Merkmalvektoren zu ermitteln;
   - den Biodiversitätswert auszugeben und/oder zu speichern und/oder an ein separates Computersystem zu übermitteln und/oder eine Maßnahme auf Basis des Biodiversitätswerts zu ermitteln.
9. Eine Vorrichtung umfassend
   - eine Detektionseinheit zum Detektieren von Gliederfüßern, wobei die Detektionseinheit eine Vielzahl an Signalen erzeugt, wobei jedes Signal einen oder mehrere Gliederfüßer repräsentiert;
   - ein Computersystem zum Verarbeiten der Signale, wobei das Computersystem konfiguriert ist, auf Basis der Signale einen Biodiversitätswert zu ermitteln und den Biodiversitätswert auszugeben, zu speichern und/oder an ein separates Computersystem zu übermitteln.
10. Ein System umfassend
   - mindestens eine Detektionseinheit zum Detektieren von Gliederfüßern, wobei die mindestens eine Detektionseinheit eine Vielzahl an Signalen erzeugt, wobei jedes Signal einen oder mehrere Gliederfüßer repräsentiert;
   - ein Computersystem zum Verarbeiten der Signale, wobei das Computersystem konfiguriert ist, auf Basis der Signale einen Biodiversitätswert zu ermitteln und diesen auszugeben, zu speichern und/oder an ein separates Computersystem zu übermitteln.
11. Die Ausführungsform 9 und/oder 10, wobei die Vorrichtung und/oder das System eine Quelle für elektromagnetische Strahlung umfasst.
12. Die Ausführungsform 9, 10 und/oder 11, wobei die Vorrichtung und/oder das System keine Mittel zum Immobilisieren von Gliederfüßern umfassen.
13. Die Ausführungsform 9, 10, 11 und/oder 12, wobei die Vorrichtung und/oder das System nur solche Mittel zum Immobilisieren von Gliederfüßern umfassen, die Gliederfüßer für eine begrenzte Zeitspanne in ihrer Bewegung einschränken.
14. Die Ausführungsform 9, 10, 11, 12 und/oder 13, wobei die Vorrichtung und/oder das System auswechselbare Karten und/oder Folien umfassen, die in unterschiedlichen Farben gestaltet sind.
15. Die Ausführungsform 9, 10, 11, 12, 13 und/oder 14, wobei die Vorrichtung eine Sendeeinheit umfasst.
16. Die Ausführungsform 9, 10, 11, 12, 13, 14 und/oder 15, wobei mehrere Detektionseinheiten ein vermaschtes Netz bilden.
17. Die Ausführungsform 1, 2, 3, 4, 5, 6, 7, 8, 9, 10, 11, 12, 13, 14, 15 und/oder 16, wobei das Detektieren einer Vielzahl an Gliederfüßern umfasst:
   - Erfassen von Signalen mittels der Detektionseinheit
18. Die Ausführungsform 1, 2, 3, 4, 5, 6, 7, 8, 9, 10, 11, 12, 13, 14, 15, 16 und/oder 17, wobei das Detektieren einer Vielzahl an Gliederfüßern umfasst:
   - Identifizieren von charakteristischen Merkmalen in den erfassten Signalen, die auf die Anwesenheit eines Gliederfüßers hindeuten.
19. Die Ausführungsform 1, 2, 3, 4, 5, 6, 7, 8, 9, 10, 11, 12, 13, 14, 15, 16, 17 und/oder 18, wobei das Detektieren einer Vielzahl an Gliederfüßern umfasst:
   - Prüfen der Anwesenheit von charakteristischen Merkmalen in den erfassten Signalen;
   - für solche Signale, die kein charakteristisches Merkmal umfassen: Verwerfen der Signale.
20. Die Ausführungsform 1, 2, 3, 4, 5, 6, 7, 8, 9, 10, 11, 12, 13, 14, 15, 16, 17, 18 und/oder 19, wobei die Signale Bilder sind.
21. Die Ausführungsform 1, 2, 3, 4, 5, 6, 7, 8, 9, 10, 11, 12, 13, 14, 15, 16, 17, 18, 19 und/oder 20, wobei jedes Signal einen Gliederfüßer repräsentiert.
22. Die Ausführungsform 1, 2, 3, 4, 5, 6, 7, 8, 9, 10, 11, 12, 13, 14, 15, 16, 17, 18, 19, 20 und/oder 21, wobei das Ermitteln des Biodiversitätswerts auf Basis der detektierten Gliederfüßer umfasst:
   - für jedes Signal:
      ∘ Eingeben des Signals in ein trainiertes Modell des maschinellen Lernens;
      ∘ Empfangen eines Merkmalvektors von dem trainierten Modell des maschinellen Lernens;
   - Ermitteln des Biodiversitätswerts auf Basis der Merkmalsvektoren.
23. Die Ausführungsform 1, 2, 3, 4, 5, 6, 7, 8, 9, 10, 11, 12, 13, 14, 15, 16, 17, 18, 19, 20, 21 und/oder 22, wobei das Ermitteln des Biodiversitätswerts auf Basis der Merkmalsvektoren umfasst:
   - Ermitteln der Variabilität der Merkmalsvektoren.
24. Die Ausführungsform 1, 2, 3, 4, 5, 6, 7, 8, 9, 10, 11, 12, 13, 14, 15, 16, 17, 18, 19, 20, 21, 22 und/oder 23, wobei das Modell des maschinellen Lernens konfiguriert ist und trainiert wurde, Merkmale aus dem eingegebenen Signal zu extrahieren und den Merkmalvektor auf Basis der extrahierten Merkmale zu erzeugen.
25. Die Ausführungsform 1, 2, 3, 4, 5, 6, 7, 8, 9, 10, 11, 12, 13, 14, 15, 16, 17, 18, 19, 20, 21, 22, 23 und/oder 24, wobei das Modell des maschinellen Lernens konfiguriert ist und trainiert wurde, mittels einer Trainingsaufgabe zu lernen, welche Merkmale des Signals einen Gliederfüßer anzeigen und/oder welche Merkmale verschiedener Signale verschiedene Gliederfüßer unterscheiden.
26. Die Ausführungsform 1, 2, 3, 4, 5, 6, 7, 8, 9, 10, 11, 12, 13, 14, 15, 16, 17, 18, 19, 20, 21, 22, 23, 24 und/oder 25, wobei die Trainingsaufgabe eine Klassifikation, eine Objekterkennung, eine Segmentierung, eine Rekonstruktion, und/oder eine Unterscheidung ist oder umfasst.
27. Die Ausführungsform 1, 2, 3, 4, 5, 6, 7, 8, 9, 10, 11, 12, 13, 14, 15, 16, 17, 18, 19, 20, 21, 22, 23, 24, 25 und/oder 26, wobei das Modell des maschinellen Lernens während des Trainings ein Klassifizierungsmodell ist oder umfasst, wobei das Klassifizierungsmodell konfiguriert ist, ein Signal einer von mindestens zwei Klassen zuzuordnen.
28. Die Ausführungsform 1, 2, 3, 4, 5, 6, 7, 8, 9, 10, 11, 12, 13, 14, 15, 16, 17, 18, 19, 20, 21, 22, 23, 24, 25, 26 und/oder 27, wobei die Klasse mindestens eine Klasse, Ordnung, Familie, Gattung und/oder Art eines durch das Signal repräsentierten Gliederfüßers im Sinne der biologischen Taxonomie bezeichnet.
29. Die Ausführungsform 1, 2, 3, 4, 5, 6, 7, 8, 9, 10, 11, 12, 13, 14, 15, 16, 17, 18, 19, 20, 21, 22, 23, 24, 25, 26, 27 und/oder 28, wobei das Modell des maschinellen Lernens auf Basis von Trainingsdaten trainiert wurde, wobei die Trainingsdaten, eine Vielzahl an Referenz-Signalen umfassen, wobei jedes Referenz-Signal der Vielzahl an Referenzsignalen einer von mindestens zwei Klassen zugeordnet ist.
30. Die Ausführungsform 1, 2, 3, 4, 5, 6, 7, 8, 9, 10, 11, 12, 13, 14, 15, 16, 17, 18, 19, 20, 21, 22, 23, 24, 25, 26, 27, 28 und/oder 29, wobei das Training Modell des maschinellen Lernens umfasst:
   - für jedes Referenz-Signal einer Vielzahl von Referenzbildern:
      o Eingeben des Referenz-Signals in das Modell des maschinellen Lernens;
      ∘ Empfangen einer vorhergesagten Klasse als eine Ausgabe von dem Modell des maschinellen Lernens;
      ∘ Vergleichen der vorhergesagten Klasse mit der Klasse, der das Referenz-Signal zugeordnet ist;
      ∘ Bestimmen einer Abweichung zwischen der vorhergesagten Klasse und der Klasse, der das Referenz-Signal zugeordnet ist;
      ∘ Verringern der Abweichung durch Ändern von Parametern des Modells des maschinellen Lernens.
31. Die Ausführungsform 1, 2, 3, 4, 5, 6, 7, 8, 9, 10, 11, 12, 13, 14, 15, 16, 17, 18, 19, 20, 21, 22, 23, 24, 25, 26, 27, 28, 29 und/oder 30, wobei der Biodiversitätswert fortwährend anhand neuer Signale aktualisiert wird.
32. Die Ausführungsform 1, 2, 3, 4, 5, 6, 7, 8, 9, 10, 11, 12, 13, 14, 15, 16, 17, 18, 19, 20, 21, 22, 23, 24, 25, 26, 27, 28, 29, 30 und/oder 31, wobei das Positionieren mindestens einer Detektionseinheit für Gliederfüßer in dem Gebiet umfasst:
   - Positionieren von mehreren Detektionseinheiten an unterschiedlichen Standorten in dem Gebiet.
33. Die Ausführungsform 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31 und/oder 32, wobei das Gebiet ein Feld für den Anbau von Kulturpflanzen ist oder ein solches umfasst oder an ein solches angrenzt.
34. Die Ausführungsform 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32 und/oder 32, wobei das Gebiet ein Blühstreifen ist oder einen solchen umfasst oder an einen solchen angrenzt.
35. Die Ausführungsform 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33 und/oder 34, wobei das Gebiet eine städtische Region ist oder umfasst oder an eine solche angrenzt.
36. Die Ausführungsform 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34 und/oder 35, wobei das Gebiet ein Naturschutzgebiet ist oder umfasst oder an ein solches angrenzt.
37. Die Ausführungsform 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35 und/oder 36, wobei die Detektionseinheit ein Mikrofon zur akustischen Erkennung von Gliederfüßern umfasst.
38. Die Ausführungsform 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36 und/oder 37, wobei die Detektionseinheit Mittel zur chemischen Erkennung von Gliederfüßern umfasst.
39. Die Ausführungsform 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37 und/oder 38, wobei die Detektionseinheit Mittel zur genetischen Erkennung von Gliederfüßern umfasst.
40. Die Ausführungsform 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38 und/oder 39, wobei die Detektionseinheit ein LiDAR-System umfasst.
41. Die Ausführungsform 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 und/oder 40, wobei die Detektionseinheit eine optische Kamera umfasst.

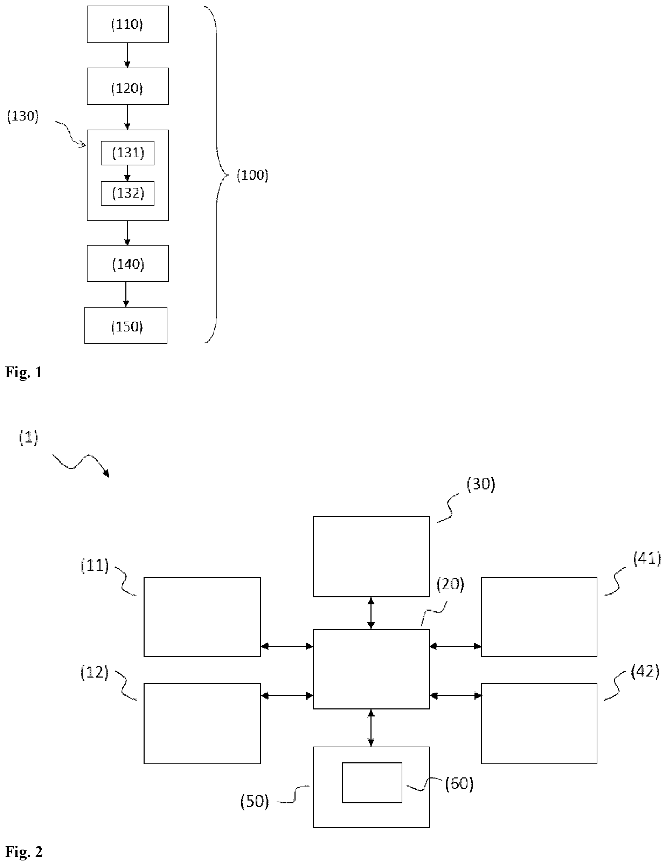

   Fig. 1 zeigt beispielhaft und schematisch eine Ausführungsform des computerimplementierten Verfahrens in Form eines Ablaufschemas. Das Verfahren (100) umfasst die Schritte:
      (110) Bereitstellen eines trainierten Modells des maschinellen Lernens;
      (120) Bereitstellen einer Vielzahl von Signalen eines Gebietes, wobei jedes Signal einen Gliederfüßer in dem Gebiet repräsentiert;
      (130) für jedes Signal der Vielzahl von Signalen:
         (131) Eingeben des Signals in das trainierte Modell des maschinellen Lernens;
         (132) Empfangen eines Merkmalvektors von dem trainierten Modell des maschinellen Lernens;
      (140) Ermitteln eines Biodiversitätswerts auf Basis der Merkmalvektoren;
      (150) Ausgeben und/oder Speichern des Biodiversitätswerts und/oder Übermitteln des Biodiversitätswerts an ein separates Computersystem und/oder Ermitteln einer Maßnahme auf Basis des Biodiversitätswerts.
   Fig. 2 zeigt beispielhaft und schematisch eine Ausführungsform eines Computersystems der vorliegenden Offenbarung.

Das Computersystem (1) umfasst eine Verarbeitungseinheit (20), die mit einem Speicher (50) verbunden ist.

Die Verarbeitungseinheit (20) (engl.: *processing unit*) kann einen oder mehrere Prozessoren allein oder in Kombination mit einem oder mehreren Speichern umfassen. Bei der Verarbeitungseinheit (20) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (20) besteht üblicherweise aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (20) kann konfiguriert sein, Computerprogramme auszuführen, die in einem Arbeitsspeicher der Verarbeitungseinheit (20) oder im Speicher (50) desselben oder eines anderen Computersystems gespeichert sein können.

Der Speicher (50) kann eine gewöhnliche Computerhardware sein, die in der Lage ist, Informationen wie z.B. digitale Bildaufnahmen (z.B. Repräsentationen des Untersuchungsbereichs), Daten, Computerprogramme und/oder andere digitale Informationen entweder vorübergehend und/oder dauerhaft zu speichern. Der Speicher (50) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher, eine austauschbare Computerdiskette, eine optische Disc, ein Magnetband oder eine Kombination der oben genannten. Zu den optischen Discs können Compact Discs mit Nur-Lese-Speicher (CD-ROM), Compact Discs mit Lese-/Schreibfunktion (CD-R/W), DVDs, Blu-ray-Discs und ähnliche gehören.

Zusätzlich zum Speicher (50) kann die Verarbeitungseinheit (20) auch mit einer oder mehreren Schnittstellen (11, 12, 30, 41, 42) verbunden sein, um Informationen anzuzeigen, zu übertragen und/oder zu empfangen. Die Schnittstellen können eine oder mehrere Kommunikationsschnittstellen (41, 42) und/oder eine oder mehrere Benutzerschnittstellen (11, 12, 30) umfassen. Die eine oder mehrere Kommunikationsschnittstellen (41, 42) können so konfiguriert sein, dass sie Informationen senden und/oder empfangen, z.B. zu und/oder von einer Detektionseinheit, einem separaten Computersystem, einem Netzwerk, einem Datenspeichern und/oder dergleichen. Die eine oder mehrere Kommunikationsschnittstellen (41, 42) können so konfiguriert sein, dass sie Informationen über physische (verdrahtete) und/oder drahtlose Kommunikationsverbindungen übertragen und/oder empfangen. Die eine oder die mehreren Kommunikationsschnittstellen (41, 42) können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen (41, 42) eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen (11, 12, 30) können eine Anzeige (30) umfassen. Eine Anzeige (30) kann so konfiguriert sein, dass sie einem Benutzer Informationen anzeigt. Geeignete Beispiele hierfür sind eine Flüssigkristallanzeige (LCD), eine Leuchtdiodenanzeige (LED), ein Plasmabildschirm (PDP) oder Ähnliches. Die Benutzereingabeschnittstelle(n) (11, 12) kann/können verdrahtet oder drahtlos sein und kann/können so konfiguriert sein, dass sie Informationen von einem Benutzer in das Computersystem (1) empfängt/empfangen, z.B. zur Verarbeitung, Speicherung und/oder Anzeige. Geeignete Beispiele für Benutzereingabeschnittstellen (11, 12) sind ein Mikrofon, ein Bild- oder Videoaufnahmegerät (z.B. eine Kamera), eine Tastatur oder ein Tastenfeld, ein Joystick, eine berührungsempfindliche Oberfläche (getrennt von einem Touchscreen oder darin integriert) oder ähnliches. In einigen Beispielen können die Benutzerschnittstellen eine automatische Identifikations- und Datenerfassungstechnologie (AIDC) für maschinenlesbare Informationen enthalten. Dazu können Barcodes, Radiofrequenz-Identifikation (RFID), Magnetstreifen, optische Zeichenerkennung (OCR), Karten mit integrierten Schaltkreisen (ICC) und ähnliches gehören. Die Benutzerschnittstellen können ferner eine oder mehrere Schnittstellen für die Kommunikation mit Peripheriegeräten wie Druckern und dergleichen umfassen.

Ein oder mehrere Computerprogramme (60) können im Speicher (50) gespeichert sein und von der Verarbeitungseinheit (20) ausgeführt werden, die dadurch programmiert wird, die in dieser Beschreibung beschriebenen Funktionen zu erfüllen. Das Abrufen, Laden und Ausführen von Anweisungen des Computerprogramms (60) kann sequenziell erfolgen, so dass jeweils ein Befehl abgerufen, geladen und ausgeführt wird. Das Abrufen, Laden und/oder Ausführen kann aber auch parallel erfolgen.

## Patentansprüche

1. Verfahren umfassend:
- Positionieren mindestens einer Detektionseinheit für Gliederfüßer in einem Gebiet;
- Detektieren einer Vielzahl an Gliederfüßern in einer Zeitspanne;
- Ermitteln eines Biodiversitätswerts auf Basis der detektierten Gliederfüßer;
- Ausgeben und/oder Speichern des Biodiversitätswerts und/oder Übermitteln des Biodiversitätswerts an ein separates Computersystem und/oder Ermitteln einer Maßnahme auf Basis des Biodiversitätswerts.

2. Verfahren gemäß Anspruch 1, wobei das Verfahren ferner umfasst:
- abwechselndes Beleuchten eines Sammelbereichs mit verschiedenen elektromagnetischen Strahlungen, die ein unterschiedliches Spektrum im infraroten, sichtbaren und/oder ultravioletten Bereich aufweisen.

3. Verfahren gemäß Anspruch 1 oder 2, wobei das Verfahren ferner umfasst:
- Präsentieren von Oberflächen mit unterschiedlichen Farben und/oder abwechselndes Präsentieren von verschiedenen Oberflächen, die sich in ihrer Farbe unterscheiden.

4. Verfahren gemäß einem der Ansprüche 1 bis 3, wobei das Detektieren einer Vielzahl an Gliederfüßern umfasst:
- Erfassen von Signalen mittels der Detektionseinheit;
- Identifizieren von charakteristischen Merkmalen in den erfassten Signalen, die auf die Anwesenheit eines Gliederfüßers hindeuten.

5. Verfahren gemäß Anspruch 4, wobei das Detektieren einer Vielzahl an Gliederfüßern umfasst:
- Prüfen der Anwesenheit von charakteristischen Merkmalen in den erfassten Signalen;
- für solche Signale, die kein charakteristisches Merkmal umfassen: Verwerfen der Signale.

6. Verfahren gemäß einem der Ansprüche 4 oder 5, wobei die Signale Bilder sind.

7. Verfahren gemäß einem der Ansprüche 4 bis 6, wobei das Ermitteln des Biodiversitätswerts auf Basis der detektierten Gliederfüßer umfasst:
- für jedes Signal:
∘ Eingeben des Signals in ein trainiertes Modell des maschinellen Lernens;
∘ Empfangen eines Merkmalvektors von dem trainierten Modell des maschinellen Lernens;
- Ermitteln des Biodiversitätswerts auf Basis der Variabilität der Merkmalsvektoren.

8. Verfahren gemäß Anspruch 7, wobei das Modell des maschinellen Lernens konfiguriert ist und trainiert wurde, Merkmale aus dem eingegebenen Signal zu extrahieren und den Merkmalvektor auf Basis der extrahierten Merkmale zu erzeugen.

9. Verfahren gemäß Anspruch 7 oder 8, wobei das Modell des maschinellen Lernens konfiguriert ist und trainiert wurde, mittels einer Trainingsaufgabe zu lernen, welche Merkmale des Signals einen Gliederfüßer anzeigen und/oder welche Merkmale verschiedener Signale verschiedene Gliederfüßer unterscheiden, wobei die Trainingsaufgabe eine Klassifikation, eine Objekterkennung, eine Segmentierung, eine Rekonstruktion, und/oder eine Unterscheidung ist oder umfasst.

10. Verfahren gemäß einem der Ansprüche 7 bis 9, wobei das Modell des maschinellen Lernens während des Trainings ein Klassifizierungsmodell ist oder umfasst, wobei das Klassifizierungsmodell konfiguriert ist, ein Signal einer von mindestens zwei Klassen zuzuordnen, wobei jede Klasse mindestens eine Klasse, Ordnung, Familie, Gattung und/oder Art eines durch das Signal repräsentierten Gliederfüßers im Sinne der biologischen Taxonomie bezeichnet, wobei das Modell des maschinellen Lernens auf Basis von Trainingsdaten trainiert wurde, wobei die Trainingsdaten, eine Vielzahl an Referenz-Signalen umfassen, wobei jedes Referenz-Signal der Vielzahl an Referenzsignalen einer von den mindestens zwei Klassen zugeordnet ist, wobei das Training des Modells des maschinellen Lernens umfasst:
- für jedes Referenz-Signal einer Vielzahl von Referenzbildern:
∘ Eingeben des Referenz-Signals in das Modell des maschinellen Lernens;
∘ Empfangen einer vorhergesagten Klasse als eine Ausgabe von dem Modell des maschinellen Lernens;
∘ Vergleichen der vorhergesagten Klasse mit der Klasse, der das Referenz-Signal zugeordnet ist;
∘ Bestimmen einer Abweichung zwischen der vorhergesagten Klasse und der Klasse, der das Referenz-Signal zugeordnet ist;
∘ Verringern der Abweichung durch Ändern von Parametern des Modells des maschinellen Lernens.

11. Verfahren gemäß einem der Ansprüche 4 bis 10, wobei der Biodiversitätswert fortwährend anhand neuer Signale aktualisiert wird.

12. Vorrichtung umfassend
- eine Detektionseinheit zum Detektieren von Gliederfüßern, wobei die Detektionseinheit eine Vielzahl an Signalen erzeugt, wobei jedes Signal einen oder mehrere Gliederfüßer repräsentiert;
- ein Computersystem zum Verarbeiten der Signale, wobei das Computersystem konfiguriert ist, auf Basis der Signale einen Biodiversitätswert zu ermitteln und den Biodiversitätswert auszugeben, zu speichern und/oder an ein separates Computersystem zu übermitteln.

13. System umfassend
- mindestens eine Detektionseinheit zum Detektieren von Gliederfüßern, wobei die mindestens eine Detektionseinheit eine Vielzahl an Signalen erzeugt, wobei jedes Signal einen oder mehrere Gliederfüßer repräsentiert;
- ein Computersystem zum Verarbeiten der Signale, wobei das Computersystem konfiguriert ist, auf Basis der Signale einen Biodiversitätswert zu ermitteln und diesen auszugeben, zu speichern und/oder an ein separates Computersystem zu übermitteln.

14. Vorrichtung gemäß Anspruch 12 und/oder System gemäß Anspruch 13, ferner umfassend:
- verschiedene Quellen für elektromagnetische Strahlung mit unterschiedlichen Spektralbereichen oder auswechselbaren Karten und/oder Folien, die in unterschiedlichen Farben gestaltet sind; und
- keine Mittel zum Immobilisieren von Gliederfüßern oder nur solche Mittel zum Immobilisieren von Gliederfüßern, die Gliederfüßer für eine begrenzte Zeitspanne in ihrer Bewegung einschränken;
wobei die Detektionseinheit ein Mikrofon zur akustischen Erkennung von Gliederfüßern umfasst oder die Detektionseinheit Mittel zur chemischen Erkennung von Gliederfüßern umfasst oder die Detektionseinheit Mittel zur genetischen Erkennung von Gliederfüßern umfasst oder die Detektionseinheit ein LiDAR-System umfasst oder die Detektionseinheit eine Kamera umfasst.

15. Der Gegenstand des Anspruchs 1, 2, 3, 4, 5, 6, 7, 8, 9, 10, 11, 12, 13 oder 14,
wobei das Gebiet ein Feld für den Anbau von Kulturpflanzen ist oder ein solches umfasst oder an ein solches angrenzt, oder das Gebiet ein Blühstreifen ist oder einen solchen umfasst oder an einen solchen angrenzt, oder das Gebiet eine städtische Region ist oder umfasst oder an eine solche angrenzt, oder das Gebiet ein Naturschutzgebiet ist oder umfasst oder an ein solches angrenzt.
